# FASCICULE DE BREVET EUROPEEN

(11) **EP 3 400 269 B1**
(45) Date de publication et mention de la délivrance du brevet: **21.04.2021**
(21) Numéro de dépôt: 17712534.1
(22) Date de dépôt: 09.01.2017
(51) Int. Cl.: C09K 11/06, B42D 25/387, C09K 11/02

(54) **UTILISATION DE 4-BORA-3A,4A-DIAZA-S-INDACÈNES POUR LA SÉCURISATION**
VERWENDUNG VON 4-BORA-3A, 4A-DIAZA-S-INDACENEN FÜR SICHERHEITSZWECKE
USE OF 4-BORA-3A,4A-DIAZA-S-INDACENES FOR SECURITY PURPOSES

(30) Priorité: 08.01.2016 FR 1650164
(43) Date de publication de la demande: 14.11.2018
(73) Titulaire: Crime Science Technology, 59120 Loos (FR)
(72) Inventeur: PRETE, Cosimo, 59650 Villeneuve D'Ascq (FR)
(74) Mandataire: Plasseraud IP
(86) Numéro de dépôt international: PCT/FR2017/050045
(87) Numéro de publication internationale: WO 2017/118830

(56) Documents cités:
- WO-A1-93/23492
- CA-A1- 2 921 214
- US-A- 5 187 288
- US-A1- 2004 000 787
- US-A1- 2011 069 307
- CHEN J ET AL: "4,4-DIFLUORO-4-BORA-3A,4A-DIAZA-S-INDACEN E (BODIPY) DYES MODIFIED FOR EXTENDED CONJUGATION AND RESTRICTED BOND ROTATIONS", THE JOURNAL OF ORGANIC CHEMISTRY, AMERICAN CHEMICAL SOCIETY ETC.|, vol. 65, 18 avril 2000 (2000-04-18), pages 2900-2906, XP000960871, ISSN: 0022-3263, DOI: 10.1021/JO991927O
- TATSUYA AOTAKE ET AL: "An Optically and Thermally Switchable Electronic Structure Based on an Anthracene-BODIPY Conjugate", CHEMISTRY - A EUROPEAN JOURNAL., vol. 21, no. 13, 23 mars 2015 (2015-03-23) , pages 4966-4974, XP055304412, WEINHEIM, DE ISSN: 0947-6539, DOI: 10.1002/chem.201406384
- HAI-TAO FENG ET AL: "Multicolor Emissions by the Synergism of Intra/Intermolecular Slipped [pi]-[pi] Stackings of Tetraphenylethylene-DiBODIPY Conjugate", CHEMISTRY OF MATERIALS, vol. 27, no. 22, 24 novembre 2015 (2015-11-24), pages 7812-7819, XP055304451, US ISSN: 0897-4756, DOI: 10.1021/acs.chemmater.5b03765

## Description

La présente invention se rapporte au domaine de la sécurisation et de l'authentification de produits, notamment de documents, comprenant des polymères. Elle se rapporte plus particulièrement à la sécurisation et l'authentification documents identitaires, fiduciaires ou administratifs.

De nos jours la contrefaçon et la production de faux croissent de manière importante dans beaucoup de secteurs à hautes valeurs ajoutées comme les produits de luxe, les pièces automobiles et aéronautiques ou les emballages, notamment de médicaments tels que les blisters. Avec le développement de l'usurpation d'identité et l'instauration notamment de permis de conduire à point dans certains pays, les documents identitaires et administratifs sont de plus en plus la cible de falsifications. La sécurisation et l'authenticité de ce type de produits et de documents sont donc primordiales et revêtent des enjeux sécuritaires aussi bien nationaux qu'internationaux.

Il est ainsi nécessaire de continuellement fournir de nouveaux moyens permettant de lutter efficacement contre la falsification, notamment l'altération d'un document original, ou la contrefaçon (production de faux).

Pour la suite de la description, le terme document se réfère à un ensemble formé par un support et une information. Le support peut être de différentes natures, prendre différentes formes et peut comprendre un polymère ou un mélange de polymères. Ce support peut par exemple être constitué entièrement ou en partie d'un matériau polymère.

A titre d'exemple de document on citera notamment les documents identitaires tels que les passeports, les cartes d'identité, les permis de conduire ou les cartes de santé, mais aussi les documents fiduciaires comme les billets de banque et les chèques ou encore les documents administratifs comme par exemple les certificats d'immatriculation.

Les documents peuvent donc se présenter sous la forme de papier, de livret ou encore sous la forme de carte et les informations peuvent y être aussi bien imprimées et/ou gravées à la surface lorsqu'il s'agit de papier ou de carte que dans les feuillets lorsqu'il s'agit de livret.

Du fait de la valeur importante associée aux informations contenues, les documents nécessitent d'être sécurisés.

Dans le domaine de la sécurisation des documents, diverses sociétés apportent des solutions d'authentification visuelle, par exemple à l'aide d'hologrammes ou de gravures lasers, qui peuvent permettre d'insérer des informations sur le corps de carte en polycarbonate, telle que des cartes d'identité, des cartes de santé ou des permis de conduire. La demande EP0708935 décrit ainsi un ensemble de couche de protection holographique. Cet ensemble est constitué d'un film support ayant au moins une couche formée par un vernis de protection, une couche réflective ou transparente portant la microstructure diffractante, et enfin une couche adhésive. Une fois l'ensemble transféré sur un document on obtient la sécurisation de ce dernier.

Par la suite, ce système a été amélioré dans la demande WO2010/086522 via l'ajout de perforations afin de rendre plus difficile la désolidarisation des différentes couches. Il n'en reste pas moins que l'ensemble est constitué par une multitude de parties qu'il est nécessaire d'assembler et maintenant de perforer, ce qui représente à la fois des contraintes techniques, de temps et de coût.

Avec le développement de l'informatique, la sécurité des documents s'est également renforcée via l'incorporation d'éléments électroniques, tels que les puces, rendant ainsi la falsification plus difficile.

Le document CA 2921214 décrit des compositions de résine qui peuvent être détectées à la fois par rayons X et par émission lumineuse, ainsi qu'un article moulé obtenu à partir desdites compositions de résine. Les compositions de résine contiennent une substance émettrice de lumière pouvant être une molécule émettant dans le proche infrarouge, une substance radio-opaque, et une résine.

A l'heure actuelle, les documents sont sécurisés par des éléments sécuritaires que l'on peut classer selon trois niveaux de sécurité en fonction des moyens mis en œuvre pour la détection. Ainsi, les éléments sécuritaires de niveau 1 sont des éléments pouvant être détectés par au moins un des cinq sens ou par l'intermédiaire d'un fond contrasté. Dans ce niveau on trouvera notamment les guilloches, les dispositifs de variabilité optique tels que les impressions irisées, les hologrammes, les encres optiquement variable (Optical Variable Ink), les marqueurs, les images laser variables (Changeable Laser Image) ou encore les images laser multiples (Multiple Laser Image).

Les éléments sécuritaires de niveau 2 sont des éléments détectables au moyen d'un équipement simple comme une lampe Ultra-Violet, une lentille convexe ou encore une lumière flash d'un téléphone portable. On trouvera dans ce niveau les éléments détectables tels que les micro-impressions, les encres fluorescentes, ainsi que les fibres ou plaquettes fluorescentes.

Enfin, les éléments sécuritaires de niveau 3 sont des éléments détectables au moyen d'un équipement sophistiqué comme par exemple un spectrofluoromètre ou un microscope électronique. Dans cette catégorie se retrouvent notamment les pigments nano-gravés, les puces biométriques ainsi que les marqueurs fluorescents non détectable à l'œil nu (anglais : taggants).

D'une manière générale, un document incorpore plusieurs éléments sécuritaires de niveaux différents.

Bien que les solutions de sécurisation existantes s'avèrent intéressantes, elles sont parfois difficiles à mettre en œuvre et/ou à contrôler. Il existe donc un réel besoin de nouveaux moyens de sécurisation simples à mettre en œuvre, stables et permettant ensuite un contrôle rapide de l'authenticité des produits ou des documents, tout en assurant un haut niveau de sécurité. Ces moyens ne devant pas être exclusifs les uns des autres.

Les inventeurs ont ainsi réussi à mettre au point un moyen de sécurisation permettant de contrôler l'authenticité de produits comprenant des polymères tels que les documents, notamment identitaire, fiduciaire ou administratif, mais aussi tel que les emballages de médicament (notamment blisters), les produits de luxe, les produits cosmétiques, les pièces automobiles et aéronautiques ou encore les pièces d'usure dans l'industrie comme par exemple les joints.

Grâce au moyen de sécurisation mis au point, le contrôle de l'authenticité peut se faire sur les trois niveaux de sécurité tels que définis ci-dessus.

En effet, grâce à l'utilisation d'un ou plusieurs composé(s) de la famille des 4-bora-3a,4a-diaza-s-indacènes incorporé(s) dans un polymère, et particulièrement dans la matrice polymère constitutive du document ou du produit en question, un élément sécuritaire détectable sur l'ensemble des niveaux est obtenu.

Cette utilisation est particulièrement avantageuse car les inventeurs ont trouvé que cette famille de composés fluorescents pouvait être incorporée dans des matrices polymères sans altérer ni les performances du polymère, ni celles du(des) composé(s) 4-bora-3a,4a-diaza-s-indacènes incorporé(s).

Ainsi, l'invention a pour objet l'utilisation d'un ou plusieurs composé(s) de la famille des 4-bora-3a,4a-diaza-s-indacènes pour la préparation d'un élément de sécurisation d'un produit, notamment d'un document, ledit élément de sécurisation comprenant un polymère et le ou les composé(s) 4-bora-3a,4a-diaza-s-indacènes étant incorporé(s) dans ledit polymère et sont choisis parmi ceux de la formule I: 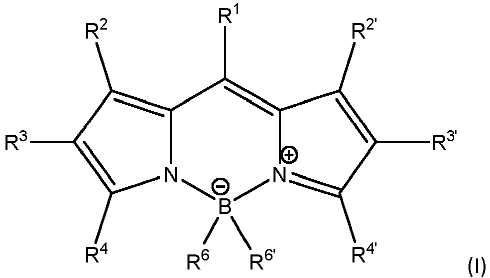
dans laquelle,
   - **R¹**: est un phényle substitué par un ou plusieurs groupements choisi(s) parmi le méthyle, fluoro, hydroxy, acétyle et méthacrylate, de préférence parmi méthyle, fluoro, hydroxy et acétyle et de préférence encore parmi méthyle ou fluoro ;
   - **R²** et **R^{2'}**: sont indépendamment choisis parmi hydrogène et alkyle en C1 à C2 ;
   - **R³** et **R^{3'}**: sont indépendamment choisis parmi hydrogène, aryle, hétéroaryle, cycloalkyle, alkyle, alcényle, alcynyle, lesdits aryle, hétéroaryle, cycloalkyle, alkyle, alcényle et alcynyle étant éventuellement substitués par un ou plusieurs groupements choisi(s) parmi alkyle en C1 à C4, aryle, hydroxy et ferrocène, ledit groupement aryle étant éventuellement substitué par un ou plusieurs groupements choisi(s) parmi aryle, alkyle en C1 à C2, halogène, hydroxy, diméthylamino, nitro, ledit aryle étant éventuellement substitué par un groupement alkyle en C1 à C2 ;
   - **R⁴** et **R^{4'}**: sont indépendamment choisis parmi aryle, hétéroaryle, cycloalkyle, alkyle, alcényle, lesdits aryle, hétéroaryle, cycloalkyle, alkyle et alcényle étant éventuellement substitués par un ou plusieurs groupements choisi(s) parmi alkyle en C1 à C3, aryle, hydroxy et ferrocène, ledit groupement aryle étant éventuellement substitué par un ou plusieurs groupements choisi(s) parmi aryle, alkyle en C1 à C2, halogène, hydroxy, diméthylamino, nitro, ledit aryle étant éventuellement substitué par un groupement alkyle en C1 à C2 ;
   - **R⁵**: est alkyle en C1 à C4 ou alcényle en C2 à C4.
   - **R⁶** et **R^{6'}**: sont indépendamment choisis parmi halogènes, alkyle en C1 à C4, alcényle en C2 à C4 ou aryl, ledit aryl étant éventuellement substitué par un ou plusieurs groupements choisi(s) parmi alkyle en C1 à C2, hydroxy, R5COO- et halogène.

Pour la suite de la description on utilisera indifféremment les termes « composé(s) 4-bora-3a,4a-diaza-s-indacène(s) » et « colorant(s) fluorescent(s) ».

Un produit, notamment un document, sécurisé selon la présente description comprendra donc un polymère dans lequel un ou plusieurs colorants fluorescents est(sont) incorporé(s). Ces documents sécurisés pourront être authentifiés grâce aux propriétés et aux effets conférés par les colorants fluorescents.

Le polymère incorporant un ou plusieurs colorants fluorescents forme donc un élément de sécurisation qui pourra aussi bien être mis en œuvre au moment de la fabrication du produit, notamment du document en question, qu'être appliqué ou intégré *a posteriori* à ces derniers. Ainsi, dans le cadre de la sécurisation d'un document, l'élément de sécurisation pourra être présent sur tout ou partie du document. Ces points seront développés plus loin dans la description.

Dans tous les cas, les produits et notamment les documents obtenus, seront sécurisés par l'utilisation d'un ou plusieurs colorant(s) fluorescent(s) incorporé(s) dans un polymère. La sécurisation permet de conférer aux produits plusieurs effets et notamment les effets suivants :
- Effet activation/désactivation (on/off) : Cet effet correspond à la visualisation d'un changement de couleur suite à une stimulation de la fluorescence des colorants fluorescents notamment par une source de lumière type LED ou UV. Ceci constitue une sécurité de niveau 2.
- Effet guide d'onde : La présence de sillons dans la couche ou l'ensemble de couche, génère une discontinuité d'indice de réfraction qui stimule la fluorescence de la couche sécurisée. Ainsi, la couleur observée au niveau du sillon est différente de celle observée sur le reste de la couche ou de l'ensemble de couche. Ceci constitue une sécurité de niveau 1.

Les composés 4-bora-3a,4a-diaza-s-indacènes sont des colorants fluorescents dont la première synthèse a été publiée en 1968 (A. Treibs et al, Justus Liebigs Ann. Chem. 1968, 718, 208). Depuis, plusieurs autres synthèses ont été publiées (par exemple : Chem. Eur. J., 2009, 15, 5823 ; J. Phys. Chem. C, 2009, 113, 11844; Chem. Eur. J., 2011, 17, 3069; J. Phys. Chem. C, 2013, 117, 5373) et de nombreux composés 4-bora-3a,4a-diaza-s-indacènes sont commercialement disponibles, par exemple auprès de ThermoFisher Scientific (Waltham, MA USA).

Ils possèdent des propriétés d'absorption et d'émission remarquables et ont notamment des bandes d'excitation et d'émission fluorescente relativement étroites avec des rendements quantiques φ élevés compris entre 0,5 et 1, ce qui les rend très fluorescents. De plus, ces composés présentent une bonne photostabilité ainsi qu'une stabilité thermique importante. En effet, les colorants fluorescents selon la description sont généralement stables jusqu'à 300°C. Grâce à cette stabilité thermique importante, ces colorants fluorescents peuvent facilement être incorporés dans des matrices polymères à l'état fondu et contre toute attente, les performances au niveau de l'absorption et de l'émission de fluorescence ne sont pas altérées par l'incorporation dans une matrice polymère.

L'utilisation d'un ou plusieurs composés 4-bora-3a,4a-diaza-s-indacènes est également remarquable en ce que les produits, notamment documents, sécurisés conformément à la description peuvent être authentifiés grâce à la combinaison unique de la couleur absorbée et de la fluorescence spécifique que les colorants fluorescents confèrent au polymère. Ainsi, seul un produit authentique présentera à la fois les bonnes propriétés d'absorption et d'émission de fluorescence.

Les produits, notamment documents, comprenant un polymère qui sont sécurisés selon la description par l'incorporation d'un ou plusieurs composés 4-bora-3a,4a-diaza-s-indacènes dans le polymère peuvent donc être authentifiés sur les trois niveaux de sécurité décrits ci-dessus grâce à la seule présence du ou des composé(s) 4-bora-3a,4a-diaza-s-indacène(s). A la connaissance de la Demanderesse, c'est la première fois qu'un seul élément de sécurisation permet une telle sécurisation multi niveaux.

En effet, les composés 4-bora-3a,4a-diaza-s-indacènes possèdent tous une bande d'absorption dans le visible et la couleur perçue à l'œil nu correspondra à la couleur complémentaire de la couleur absorbée. Par exemple un composé absorbant vers 500-520 nm, ce qui correspond à une couleur vert/bleu, apparaîtra à l'œil nu dans les tons orange/rouge. Cette propriété permet ainsi d'obtenir des éléments sécuritaires de niveau 1.

Concernant les propriétés de fluorescence, les composés de la famille des 4-bora-3a,4a-diaza-s-indacènes selon la description possèdent tous des bandes d'excitation dans l'Ultra-Violet (U.V.) et des bandes d'émission dans le visible. Ils peuvent donc être excités par l'intermédiaire notamment d'une lampe U.V. émettant entre 100 nm et 400 nm et la fluorescence pourra être détectée à l'œil nu, ce qui permet d'obtenir des éléments sécuritaire de niveau 2.

Enfin, la longueur d'onde d'émission pourra être déterminée à l'aide d'un spectrofluoromètre ou fluorimètre basse résolution à simple réseau (détection par photodiode ou tube photomultiplicateur), ce qui confère aux éléments sécuritaires selon la présente invention un niveau 3 de sécurité.

Ainsi, les produits et notamment les documents sécurisés selon la présente invention seront, grâce à l'association des propriétés d'absorption et de fluorescence, détectables sur les 3 niveaux.

L'authentification au sens de la présente invention s'entend comme la vérification de l'authenticité d'un produit, notamment d'un document par la détection des éléments sécuritaires ou des moyens de sécurisation qui y sont incorporés. Cette détection de la présence ou de l'absence de coloration ou de fluorescence permet ainsi d'authentifier ou non le produit, notamment document en question.

Un produit, notamment un document, sera donc authentique lorsqu'il n'aura pas été reproduit et qu'il contiendra le ou les éléments sécuritaires, par opposition à un non authentique que l'on qualifiera de faux, et qui ne contiendra pas lesdits éléments sécuritaires entrainant ainsi un défaut de détection.

Par le terme « incorporé » on entend le fait qu'un ou plusieurs composé(s) 4-bora-3a,4a-diaza-s-indacène(s) sont intimement intégrés dans le polymère de façon à former un mélange homogène, ne présentant pas de dispersion. L'intégration du(des) composé(s) dans le polymère peut être réalisée de différentes manières.

A titre d'exemple, l'intégration est réalisée à chaud. Dans ce cas de figure le polymère est chauffé jusqu'à sa température de fusion, puis le ou les composés 4-bora-3a,4a-diaza-s-indacènes sont ajoutés dans la masse fondue avant que l'ensemble soit mélangé jusqu'à l'homogénéité.

A titre d'exemple toujours, le colorant fluorescent est intégré sous forme de poudre au polymère. Dans ce cas, le polymère peut se présenter sous la forme d'une résine photopolymérisable et afin de faciliter l'intégration, un solvant polaire peut être ajouté, comme par exemple l'isopropanol. L'ensemble est ensuite mélangé de sorte à obtenir un mélange homogène ne présentant pas de dispersion, ledit mélange trouvera une application toute particulière dans certaines techniques d'impression 3D et notamment pour la fabrication d'hologrammes.

L'incorporation peut se faire dans tous types de polymère comme par exemple le polycarbonate, le polyester, le polystyrène, le polyéthylène, le polypropylène, le polyéthylène téréphtalate (PET), le polyacrylate, le polyméthacrylate, le poly(chlorure de vinyle), les polyamides, les polyaramides, l'acétate de vinyléthylène (EVA), le polyuréthane, le polyuréthane thermoplastique (TPU), le cyanoacrilate, les résines colophane, les résines de pin, les résines photopolymérisables ou leurs mélanges. D'une manière préférentielle l'incorporation peut se faire dans un polymère choisi parmi le polycarbonate, le polyester, le polypropylène, le polyuréthane thermoplastique et les résines photopolymérisables, de préférence encore parmi le polycarbonate, le polyester, le polypropylène et leurs mélanges.

On utilisera avantageusement un polymère qui ne contient pas d'additif anti-U.V. afin de permettre un maintien optimal des propriétés de fluorescence. Il est également avantageux d'utiliser un polymère qui est transparent après avoir été mis en forme.

La quantité de colorant fluorescent à incorporer est celle nécessaire à la détection des propriétés d'absorbance et de fluorescence. Les colorants fluorescents selon la description présentent l'avantage de permettre une détection des propriétés même lorsqu'ils sont incorporés au sein du polymère dans de très faibles quantités.

En effet, des quantités en colorants fluorescents allant de 0.01 % à 5 % en poids par rapport au poids total du polymère sont suffisantes pour la détection, préférentiellement des quantités allant de 0.01 % à 2 % en poids par rapport au poids total du polymère et encore plus préférentiellement, des quantités allant de 0.01 % à 0.05 % en poids par rapport au poids total du polymère.

Les quantités en colorant(s) fluorescent(s) seront adaptées par l'homme du métier en fonction de la mise en forme du polymère et de l'effet visuel recherché. Par exemple, plus l'effet visuel de transparence sera recherché, plus la quantité en colorant fluorescent devra être faible, tout comme l'épaisseur de la mise en forme obtenue.

Comme précédemment mentionné, le polymère incorporant un ou plusieurs composés fluorescents forme donc un élément de sécurisation qui pourra être aussi bien utilisé au moment de la fabrication du produit, notamment du document en question, qu'être appliqué ou intégré *a posteriori* à ces derniers. Pour la sécurisation des produits et notamment des documents, l'élément de sécurisation pourra être présent sur tout ou partie du document aussi bien en surface que dans l'épaisseur même du document. Par exemple, il pourra être présent sur la totalité d'une face ou uniquement sur la périphérie et pourra même constituer le support du document en tant que tel.

En fonction de l'utilisation souhaitée, l'élément de sécurisation pourra donc être mis en forme par des méthodes connues de l'homme du métier.

En effet, dans un mode de réalisation, l'élément de sécurisation se présente sous la forme d'une couche ou d'un ensemble de couches préparé(es) par des techniques connues de l'homme du métier comme par exemple le laminage, l'extrusion, le calandrage, l'extrusion calandrage, l'extrusion gonflage avec ou sans bi-étirage ou encore le vernissage et/ou enduction. Ces techniques seront choisies en fonction du polymère utilisé et de l'épaisseur finale de la couche ou de l'ensemble de couche à obtenir. A titre d'exemple, si le polymère est un polycarbonate ou un polyuréthane thermoplastique, le principe de l'extrusion calandrage sera préféré. A titre d'exemple encore, si le polymère est le polypropylène, le principe de l'extrusion gonflage est préféré, en particulier le principe de l'extrusion gonflage avec bi-étirage. Un ensemble de couches au sens de la présente invention peut par exemple être obtenu par laminage de deux ou plusieurs couches de polymère incorporant un ou plusieurs colorants fluorescents.

Une telle couche ou ensemble de couches trouve une application avantageuse dans la sécurisation de documents. Préférentiellement, la couche ou l'ensemble de couches ainsi obtenue est transparent(e).

L'utilisation d'une couche ou d'un ensemble de couches transparentes selon la présente invention est particulièrement avantageuse car, en plus des effets précédemment décrits, la couche ou l'ensemble de couches présente les effets suivants :
- Effet changement de couleur (switch-color) : Cet effet correspond à un changement de couleur lors de la superposition de la couche ou de l'ensemble de couches sur un fond contrasté (type fond foncé, notamment noir, ou fond clair, notamment blanc. On observe ainsi la couleur complémentaire de la couleur absorbée sur fond clair et la couleur de fluorescence sur fond foncé. Ceci constitue une sécurité de niveau 1.
- Effet de tranche (side-effect) : Cet effet correspond à l'observation d'une couleur complémentaire de la couleur absorbée qui est différente sur les tranches de la couche ou de l'ensemble de couches, de celle observée sur les faces. Ceci constitue une sécurité de niveau 1.
- Effet de bascule (tilt effect / rocker effect) : Cet effet correspond à un changement de couleur d'une couche ou de la superposition d'un ensemble de couches sur une surface réfléchissante (une surface métallisée par exemple), ledit changement de couleur étant fonction de l'angle d'observation et de la capacité plus ou moins réflectrice du fond réfléchissant (réflexion partielle à réflexion totale). Ainsi, on observe un changement de couleur franc de la couleur perçue à l'œil nue du substrat vers son émission de fluorescence. Ceci constitue une sécurité de niveau 1.
- Effet d'ombrage (shadow) : Cet effet correspond, lorsqu'on stimule la fluorescence par une lumière type LED ou UV et qu'on observe sur un fond clair, notamment blanc, à la visualisation à la fois de la couleur de fluorescence au niveau de la couche et de la projection de la couleur complémentaire de la couleur absorbée sur le fond clair. Ceci constitue une sécurité de niveau 2.

Avantageusement, la couche présente notamment une épaisseur allant de 0,050 mm à 0,800 mm, préférentiellement une épaisseur allant de 0,200 mm à 0,600 mm, comme par exemple une épaisseur d'environ 0,400 mm. Lorsque la couche présente une épaisseur inférieure à 0,100 mm, elle est également appelée film et trouvera une application toute particulière dans le cas de produits plats, notamment des documents et plus particulièrement des documents identitaires, fiduciaires ou administratifs et pourra être appliquée sur au moins une partie d'une des faces du produit.

L'épaisseur de la couche ou du film est fonction de différents paramètres tels que la nature du polymère utilisé pour l'incorporation du composé de la famille des 4-bora-3a,4a-diaza-s-indacènes. Par exemple, lorsque le polymère utilisé pour l'incorporation est le polypropylène, la couche ou le film obtenus peuvent avantageusement présenter une épaisseur allant de 15 µm à 100 µm. Par exemple encore, lorsque le polymère utilisé pour l'incorporation est le polycarbonate, la couche ou le film obtenus peuvent avantageusement présenter une épaisseur allant de 100 µm à 800 µm.

Selon un mode de réalisation particulier, la couche est un film est présente de préférence une épaisseur comprise entre 1 et 30 µm, comme par exemple environ 10 µm. Le film peut être obtenu selon les méthodes connues de l'homme du métier et d'une manière préférentielle il s'agit d'un film bi-orienté.

Selon ce mode de réalisation, les films bi-orientés peuvent être des films bi-orientés monocouches ou des films bi-orientés multicouches obtenus par exemple par laminage de plusieurs couches dont au moins une d'entre elles contient un composé fluorescent tel que précédemment décrit. Les films bi-orientés peuvent être obtenus par l'extrusion par filière plate, dit extrusion cast, ou encore par filière annulaire (extrusion gonflage). Le polymère utilisé pour l'obtention de films bi-orientés peut être un polymère tel que décrit précédemment, et de préférence le polymère est le polypropylène. Ainsi on obtient un film en polypropylène bi-orienté.

Dans un mode de réalisation particulier, la mise en forme de couche permettra de fabriquer des cartes par des techniques connues de l'homme du métier. On citera à titre d'exemple de cartes, les cartes professionnelles, des cartes bancaires, ou tout autre type de carte en polymère. Dans ce cas, l'élément de sécurisation constitue le support du document en tant que tel.

Les cartes pourront par exemple être obtenues par laminages de plusieurs couches de polymère dont au moins l'une d'entre elle incorpore au moins un colorant fluorescent selon la présente invention.

Dans un mode de réalisation particulier, l'élément de sécurisation est un film, c'est-à-dire une couche présentant une épaisseur inférieure à 0,100 mm, notamment allant de 0,050 mm à 0,100 mm, qui est utilisé pour laminer les deux faces d'un document, notamment d'un document identitaire. Dans un autre mode de réalisation, un tel film n'est appliqué qu'à l'une des deux faces d'un document, notamment d'un document identitaire. Dans encore un autre mode de réalisation, un tel film n'est appliqué qu'à une partie de l'une des deux faces d'un document, notamment d'un document identitaire. Dans encore un autre mode de réalisation, un tel film n'est appliqué qu'à une partie de chacune des deux faces d'un document, notamment d'un document identitaire.

Le ou les composé(s) 4-bora-3a,4a-diaza-s-indacène(s) mis en œuvre dans la présente invention peuvent être choisis parmi ceux de la formule I ci-dessous : 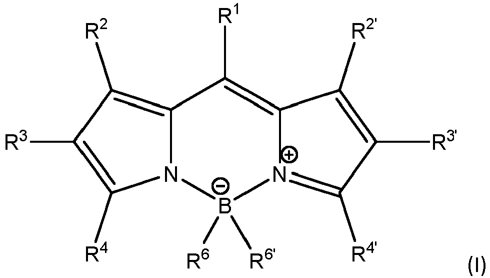 dans laquelle,
- **R¹**: est un phényle substitué par un ou plusieurs groupements choisi(s) parmi le méthyle, fluoro, hydroxy, acétyle et méthacrylate, de préférence parmi méthyle, fluoro, hydroxy et acétyle et de préférence encore parmi méthyle ou fluoro ;;
- **R²** et **R^{2'}**: sont indépendamment choisis parmi hydrogène et alkyle en C1 à C2 ;
- **R³** et **R^{3'}**: sont indépendamment choisis parmi hydrogène, aryle, hétéroaryle, cycloalkyle, alkyle, alcényle, alcynyle, lesdits aryle, hétéroaryle, cycloalkyle, alkyle, alcényle et alcynyle étant éventuellement substitués par un ou plusieurs groupements choisi(s) parmi alkyle en C1 à C4, aryle, hydroxy et ferrocène, ledit groupement aryle étant éventuellement substitué par un ou plusieurs groupements choisi(s) parmi aryle, alkyle en C1 à C2, halogène, hydroxy, diméthylamino, nitro, ledit aryle étant éventuellement substitué par un groupement alkyle en C1 à C2 ;
- **R⁴** et **R^{4'}**: sont indépendamment choisis parmi aryle, hétéroaryle, cycloalkyle, alkyle, alcényle, lesdits aryle, hétéroaryle, cycloalkyle, alkyle et alcényle étant éventuellement substitués par un ou plusieurs groupements choisi(s) parmi alkyle en C1 à C3, aryle, hydroxy et ferrocène, ledit groupement aryle étant éventuellement substitué par un ou plusieurs groupements choisi(s) parmi aryle, alkyle en C1 à C2, halogène, hydroxy, diméthylamino, nitro, ledit aryle étant éventuellement substitué par un groupement alkyle en C1 à C2 ;
- **R⁵**: est alkyle en C1 à C4 ou alcényle en C2 à C4.
- **R⁶** et **R^{6'}**: sont indépendamment choisis parmi halogènes, alkyle en C1 à C4, alcényle en C2 à C4 ou aryl, ledit aryl étant éventuellement substitué par un ou plusieurs groupements choisi(s) parmi alkyle en C1 à C2, hydroxy, R5COO- et halogène.

Des composés préférés de formule I sont ceux dans lesquels un ou plusieurs de **R², R^{2'}, R³, R^{3'}, R⁴, R^{4'}**, **R5, R6** et **R6'** sont définis comme suit :
- **R²** et **R^{2'}**: sont indépendamment choisis parmi hydrogène et un méthyle ;
- **R³** et **R^{3'}**: sont indépendamment choisis parmi hydrogène, alkyle en C1 à C3, vinyle, aryl, hétéroaryle, adamanthyle, lesdits vinyle et aryle étant éventuellement substitués par un ou plusieurs groupements choisi(s) parmi phényle, alkyle en C1 à C2, ledit phényle étant éventuellement substitué par un ou plusieurs groupements choisi(s) parmi alkyle en C1 à C2, hydroxy, bromo, nitro, diméthylamine, de préférence hydrogène, méthyle, éthyle, n-propyle, vinyle, aryl, hétéroaryle, adamanthyle, lesdits vinyle et aryle étant éventuellement substitués par un ou plusieurs groupements choisi(s) parmi phényle, alkyle en C1 à C2, ledit phényle étant éventuellement substitué par un ou plusieurs groupements choisi(s) parmi alkyle en C1 à C2, hydroxy, bromo, nitro, diméthylamine, de préférence encore, **R³ et R^{3'}** sont indépendamment choisis parmi éthyle, n-propyl, méthyle, vinyle, phényle, phénantryle, naphtyle, pyrènyle, thiophényle, benzofuranyle, lesdits vinyle, aryle et naphtyle étant éventuellement substitués par un ou plusieurs méthyle, hydroxy, bromo, nitro et diméthylamino ;
- **R⁴** et **R^{4'}**: sont indépendamment choisis parmi méthyle, vinyle, aryl, hétéroaryle, adamanthyle, lesdits vinyle et aryle étant éventuellement substitués par un ou plusieurs groupements choisi(s) parmi phényle, alkyle en C1 à C2, ledit phényle étant éventuellement substitué par un ou plusieurs groupements choisi(s) parmi alkyle en C1 à C2, hydroxy, bromo, nitro, diméthylamine, de préférence **R⁴ et R^{4'}** sont indépendamment choisis parmi méthyle, vinyle, phényle, phénantryle, naphtyle, pyrènyle, thiophényle, benzofuranyle, lesdits vinyle, aryle et naphtyle étant éventuellement substitués par un ou plusieurs méthyle, hydroxy, bromo, nitro et diméthylamino ;
- **R⁵**: est méthyle ou éthényle.
- **R⁶** et **R^{6'}**: sont indépendamment choisis parmi fluoro, alkyle en C1 à C4, alcényle en C2 à C4 ou aryl, ledit aryl étant éventuellement substitué par un ou plusieurs groupements choisi(s) parmi alkyle en C1 à C2, hydroxy, R5COO- et halogène, de préférence **R6 et R6'** sont fluoro.

Selon un mode de réalisation, le ou les composé(s) 4-bora-3a,4a-diaza-s-indacène(s) mis en œuvre dans la présente invention peuvent être choisis parmi ceux de la formule II ci-dessous : 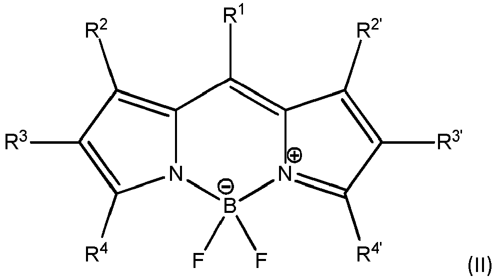 dans laquelle,
- **R¹**: est un phényle substitué par un ou plusieurs groupements choisi(s) parmi le méthyle, fluoro, hydroxy, acétyle et méthacrylate, de préférence parmi méthyle, fluoro, hydroxy et acétyle et de préférence encore parmi méthyle ou fluoro ;
- **R²** et **R^{2'}**: sont indépendamment choisis parmi hydrogène et alkyle en C1 à C2 ;
- **R³** et **R^{3'}**: sont indépendamment choisis parmi hydrogène et alkyle en C1 à C3 ;
- **R⁴** et **R^{4'}**: sont indépendamment choisis parmi aryle, hétéroaryle, cycloalkyle, alkyle, alcényle, lesdits aryle, hétéroaryle, cycloalkyle, alkyle et alcényle étant éventuellement substitués par un ou plusieurs groupements choisi(s) parmi alkyle en C1 à C3, aryle, hydroxy et ferrocène, ledit groupement aryle étant éventuellement substitué par un ou plusieurs groupements choisi(s) parmi aryle, alkyle en C1 à C2, halogène, hydroxy, diméthylamino, nitro, ledit aryle étant éventuellement substitué par un groupement alkyle en C1 à C2 ;
- **R⁵**: est alkyle en C1 à C4 ou alcényle en C2 à C4.

Des composés préférés de formule II de ce mode de réalisation sont ceux dans lesquels un ou plusieurs de **R², R^{2'}, R³, R^{3'}, R⁴, R^{4'}** et **R⁵** sont définis comme suit : ;
- **R²** et **R^{2'}**: sont indépendamment choisis parmi hydrogène et un méthyle ;
- **R³** et **R^{3'}**: sont indépendamment choisis parmi hydrogène, méthyle, éthyle, n-propyl et de préférence éthyle ;
- **R⁴** et **R^{4'}**: sont indépendamment choisis parmi méthyle, vinyle, aryl, hétéroaryle, adamanthyle, lesdits vinyle et aryle étant éventuellement substitués par un ou plusieurs groupements choisi(s) parmi phényle, alkyle en C1 à C2, ledit phényle étant éventuellement substitué par un ou plusieurs groupements choisi(s) parmi alkyle en C1 à C2, hydroxy, bromo, nitro, diméthylamine, de préférence **R⁴ et R^{4'}** sont indépendamment choisis parmi méthyle, vinyle, phényle, phénanthracényle, naphtalényle, pyrényle, thiphényle, benzofuranyl, lesdits vinyle, aryle et naphtalényle étant éventuellement substitués par un ou plusieurs méthyle, hydroxy, bromo, nitro et diméthylamino ;
- **R⁵**: est méthyle ou éthényle.

Des composés de formule I particulièrement préférés sont ceux du tableau 1 ci-après :

**Tableau 1 :**

| N° | Colorant fluorescent |
|---|---|
| 1 | 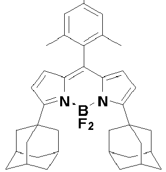 |
| 2 | 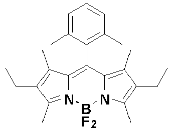 |
| 3 | 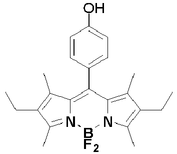 |
| 4 | 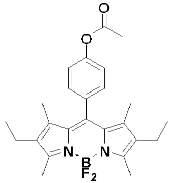 |
| 5 | 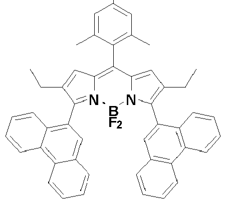 |
| 6 | 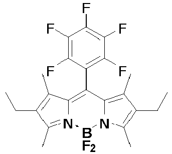 |
| 7 | 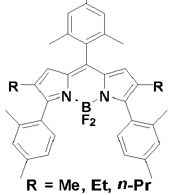 |
| 8 | 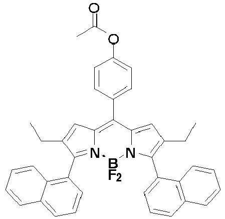 |
| 9 | 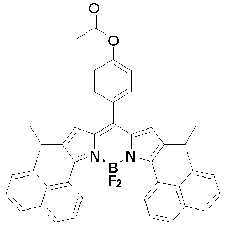 |
| 10 | 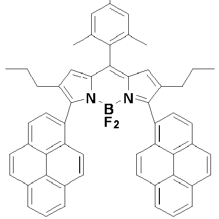 |
| 11 | 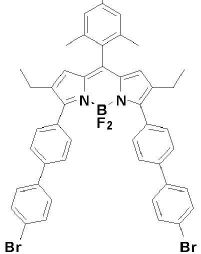 |
| 12 | 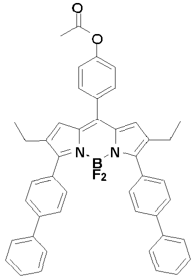 |
| 13 | 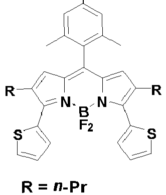 |
| 14 | 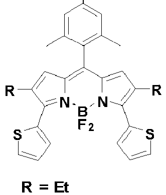 |
| 15 | 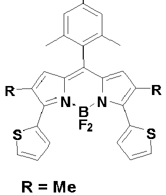 |
| 16 | 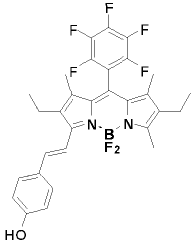 |
| 17 | 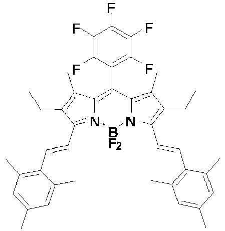 |
| 18 | 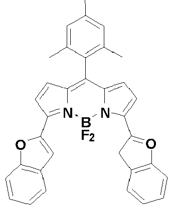 |
| 19 | 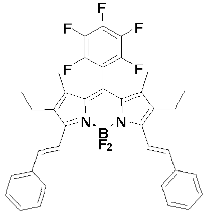 |
| 20 | 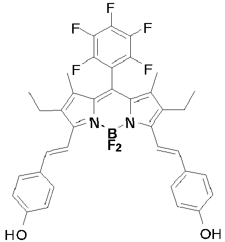 |
| 21 | 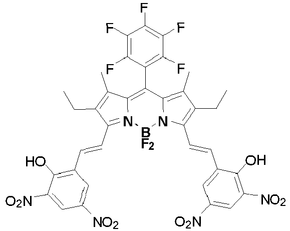 |
| 22 | 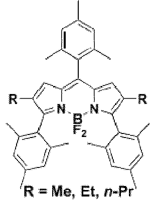 |
| 23 | 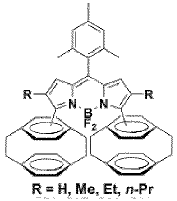 |
| 24 | 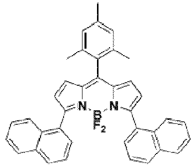 |
| 25 | 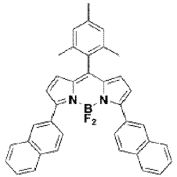 |
| 26 | 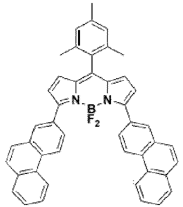 |
| 27 | 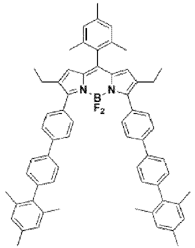 |
| 28 | 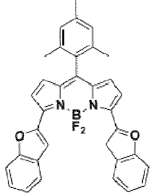 |
| 29 | 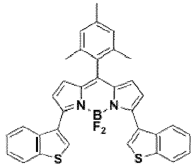 |
| 30 | 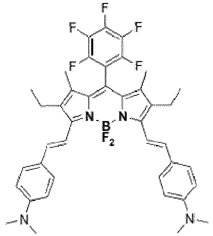 |
| 31 | 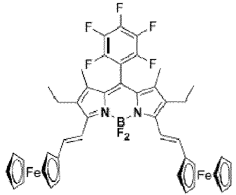 |
| 32 | 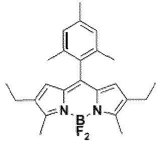 |
| 33 | 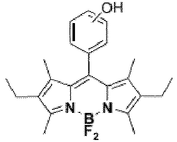 |
| | OH en position *o*, *m* ou *p* |
| 34 | 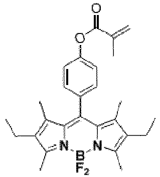 |
| 35 | 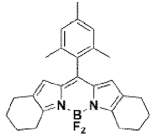 |
| 36 | 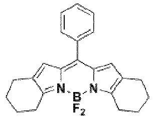 |
| 37 | 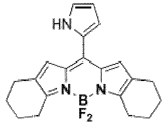 |
| 38 | 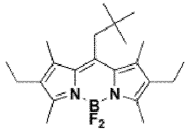 |
| 39 | 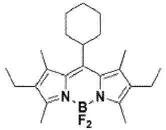 |

Pour la description des composés mis en œuvre dans la présente invention, les termes et expressions utilisés doivent, sauf indication contraire, être interprétés selon les définitions ci-après.

Le terme « halogène » désigne fluoro, chloro, bromo ou iodo. Des groupements halogènes préférés sont fluoro et bromo, fluoro étant particulièrement préféré.

Le terme « alkyle » désigne un radical hydrocarbure de formule CnH2n+1, linéaire ou ramifié, dans lequel n est un nombre entier supérieur ou égale à 1. Les groupements alkyles préférés sont les groupements alkyles en C1 à C6, linéaires ou ramifiés.

Le terme « alcényle » désigne un groupement alkyle insaturé, linéaire ou ramifié, comprenant une ou plusieurs double-liaisons carbone-carbone. Des groupements alcényles appropriés comprennent de 2 à 6 atomes de carbone, de préférence de 2 à 4 atomes de carbone et plus préférentiellement encore 2 ou 3 atomes de carbone. Des exemples non limitatifs de groupements alcényles sont éthényle (vinyle), 2-propényle (allyle), 2-butényle et 3-butényle, l'éthényle et le 2-propényle étant préféré.

Le terme « cycloalkyl(e) », seul ou en tant que partie d'un autre groupement, désigne un radical hydrocarbure mono-, di- ou tri-cyclique saturé ayant 3 à 12 atomes de carbone, notamment 5 à 10 atomes de carbone, plus particulièrement 6 à 10 atomes de carbone. Des radicaux cycloalkyl appropriés comprennent, sans y être limités, cyclopentyle, cyclohexyle, norbornyle, adamantyle, notamment cyclohexyle et adamantyle. Des groupements cycloalkyle préférés comprennent cyclohexyle, adamant-1-yle et adamant-2-yle.

Le terme « aryle » désigne un radical hydrocarbure polyinsaturé, aromatique, monocyclique (par exemple phényle) ou polycycliques (par exemple naphtyle, anthracène, phénantryle, pyrènyle). Des groupements aryle préférés comprennent phényle, naphtyle, anthracène, phénantryle, pyrènyle.

Le terme « hétéroaryle » désigne un cycle aromatique ayant de 5 à 12 atomes de carbones dans lequel au moins un atome de carbone est remplacé par un atome d'oxygène, d'azote ou de soufre ou par -NH, lesquels atomes d'azote et de soufre peuvent éventuellement être oxydés et lequel atome d'azote peut éventuellement être quaternisé, ou un système cyclique contenant 2 à 3 cycles fusionnés contenant chacun typiquement 5 ou 6 atomes et dont au moins un cycle est aromatique, au moins un atome de carbone de l'au moins un cycle aromatique étant remplacé par un atome d'oxygène, d'azote ou de soufre ou par -NH, lesquels atomes d'azote et de soufre peuvent éventuellement être oxydés et lequel atome d'azote peut éventuellement être quaternisé. Des exemples de groupements hétéroaryles comprennent furanyle, thiophényle, pyrrolyle, pyridinyl et benzofuranyle.

Les composés mis en œuvre dans la présente invention peuvent être synthétisés selon des méthodes connues de l'homme du métier. Il pourra notamment se référer à la publication d'A. Loudet et al. (Chem. Rev. 2007, 107, 4891-4932).

Un autre objet de la présente invention est ainsi un élément de sécurisation comprenant un polymère et un ou plusieurs composé(s) de la famille des 4-bora-3a,4a-diaza-s-indacènes, le ou lesdits composé(s) étant incorporé(s) dans ledit polymère et sont choisis parmi ceux de la formule I : 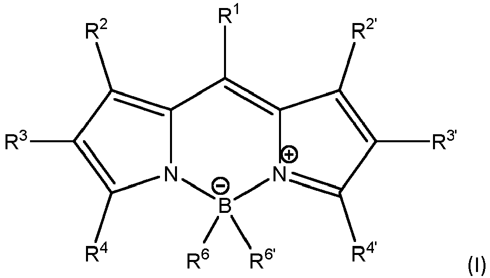 dans laquelle,
- **R¹**: est un phényle substitué par un ou plusieurs groupements choisi(s) parmi le méthyle, fluoro, hydroxy, acétyle et méthacrylate, de préférence parmi méthyle, fluoro, hydroxy et acétyle et de préférence encore parmi méthyle ou fluoro ;
- **R²** et **R^{2'}**: sont indépendamment choisis parmi hydrogène et alkyle en C1 à C2 ;
- **R³** et **R^{3'}**: sont indépendamment choisis parmi hydrogène, aryle, hétéroaryle, cycloalkyle, alkyle, alcényle, alcynyle, lesdits aryle, hétéroaryle, cycloalkyle, alkyle, alcényle et alcynyle étant éventuellement substitués par un ou plusieurs groupements choisi(s) parmi alkyle en C1 à C4, aryle, hydroxy et ferrocène, ledit groupement aryle étant éventuellement substitué par un ou plusieurs groupements choisi(s) parmi aryle, alkyle en C1 à C2, halogène, hydroxy, diméthylamino, nitro, ledit aryle étant éventuellement substitué par un groupement alkyle en C1 à C2 ;
- **R⁴** et **R^{4'}**: sont indépendamment choisis parmi aryle, hétéroaryle, cycloalkyle, alkyle, alcényle, lesdits aryle, hétéroaryle, cycloalkyle, alkyle et alcényle étant éventuellement substitués par un ou plusieurs groupements choisi(s) parmi alkyle en C1 à C3, aryle, hydroxy et ferrocène, ledit groupement aryle étant éventuellement substitué par un ou plusieurs groupements choisi(s) parmi aryle, alkyle en C1 à C2, halogène, hydroxy, diméthylamino, nitro, ledit aryle étant éventuellement substitué par un groupement alkyle en C1 à C2 ;
- **R⁵**: est alkyle en C1 à C4 ou alcényle en C2 à C4.
- **R⁶** et **R^{6'}**: sont indépendamment choisis parmi halogènes, alkyle en C1 à C4, alcényle en C2 à C4
ou aryl, ledit aryl étant éventuellement substitué par un ou plusieurs groupements choisi(s) parmi alkyle en C1 à C2, hydroxy, R5COO- et halogène.

La présente invention a également pour objet un procédé de sécurisation d'un produit, notamment d'un document, mettant en œuvre un élément de sécurisation tel que défini précédemment. Le procédé de sécurisation comprend:
- la préparation d'un élément de sécurisation comprenant un polymère et un ou plusieurs composé(s) de la famille des 4-bora-3a,4a-diaza-s-indacènes, le ou lesdits composé(s) étant incorporé(s) dans ledit polymère et sont choisis parmi ceux de la formule I : 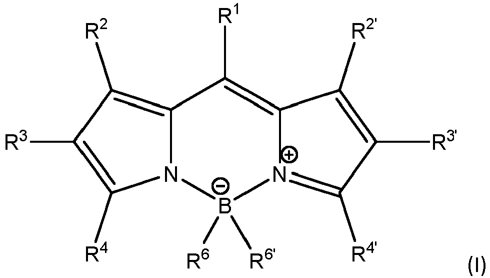 dans laquelle,
   - **R¹**: est un phényle substitué par un ou plusieurs groupements choisi(s) parmi le méthyle, fluoro, hydroxy, acétyle et méthacrylate, de préférence parmi méthyle, fluoro, hydroxy et acétyle et de préférence encore parmi méthyle ou fluoro ;
   - **R²** et **R^{2'}**: sont indépendamment choisis parmi hydrogène et alkyle en C1 à C2 ;
   - **R³** et **R^{3'}**: sont indépendamment choisis parmi hydrogène, aryle, hétéroaryle, cycloalkyle, alkyle, alcényle, alcynyle, lesdits aryle, hétéroaryle, cycloalkyle, alkyle, alcényle et alcynyle étant éventuellement substitués par un ou plusieurs groupements choisi(s) parmi alkyle en C1 à C4, aryle, hydroxy et ferrocène, ledit groupement aryle étant éventuellement substitué par un ou plusieurs groupements choisi(s) parmi aryle, alkyle en C1 à C2, halogène, hydroxy, diméthylamino, nitro, ledit aryle étant éventuellement substitué par un groupement alkyle en C1 à C2 ;
   - **R⁴** et **R^{4'}**: sont indépendamment choisis parmi aryle, hétéroaryle, cycloalkyle, alkyle, alcényle, lesdits aryle, hétéroaryle, cycloalkyle, alkyle et alcényle étant éventuellement substitués par un ou plusieurs groupements choisi(s) parmi alkyle en C1 à C3, aryle, hydroxy et ferrocène, ledit groupement aryle étant éventuellement substitué par un ou plusieurs groupements choisi(s) parmi aryle, alkyle en C1 à C2, halogène, hydroxy, diméthylamino, nitro, ledit aryle étant éventuellement substitué par un groupement alkyle en C1 à C2 ;
   - **R⁵**: est alkyle en C1 à C4 ou alcényle en C2 à C4. - **R⁶** et **R^{6'}** sont indépendamment choisis parmi halogènes, alkyle en C1 à C4, alcényle en C2 à C4 ou aryl, ledit aryl étant éventuellement substitué par un ou plusieurs groupements choisi(s) parmi alkyle en C1 à C2, hydroxy, R5COO- et halogène, ledit élément de sécurisation pouvant constituer le produit et notamment le document en tant que tel, ou
- être appliqué audit produit et notamment audit document à sécuriser.

Dans le cas où l'élément de sécurisation ne constitue pas le produit en tant que tel, l'application sur le produit à sécuriser est mise en œuvre par des techniques connues de l'homme du métier en fonction dudit produit et notamment dudit document à sécuriser.

A titre d'exemple, si le produit à sécuriser est un document et notamment un document identitaire, l'application de l'élément de sécurisation peut être réalisée par laminage sur au moins une partie d'une des faces du document.

Dans un mode de réalisation particulier, le produit à sécuriser est un document comme par exemple un document identitaire, fiduciaire ou administratif et l'élément de sécurisation pourra ainsi être appliqué à au moins une partie d'une face du produit.

Dans une variante de ce mode de réalisation, l'élément de sécurisation est un film qui est laminé sur les deux faces d'un document. Le laminage peut être effectué à chaud ou à froid. Dans une autre variante, le film n'est appliqué qu'à l'une des deux faces d'un document. Dans encore une autre variante, le film n'est appliqué qu'à une partie de l'une des deux faces d'un document. Dans encore une autre variante, le film n'est appliqué qu'à une partie de chacune des deux faces d'un document.

Selon une autre variante de réalisation, l'élément de sécurisation est un film qui est laminé sur au moins une face comportant une surface réfléchissante. Une surface réfléchissante est une surface dont-on maitrise les capacités de réflexion. Par exemple, la surface réfléchissante peut être une surface métallisée. Ainsi l'élément de sécurisation peut être un ensemble de plusieurs couches dont au moins l'une d'entre elles comporte une surface métallisée sur laquelle est laminée un film polymère incorporant les composés de la famille des 4-bora-3a,4a-diaza-s-indacènes tels que ci-dessus.

Dans un mode de réalisation particulier, l'élément de sécurisation est une couche laminée de part et d'autre par au moins une couche de polymère ne contenant pas de colorant fluorescent, ainsi l'élément de sécurisation constitue le cœur de carte.

Selon un mode de réalisation particulier, l'élément de sécurisation est un vernis et peut ainsi être appliqué à la surface d'un produit à sécuriser. La surface sur laquelle le vernis est appliqué peut notamment être une surface réfléchissante. Selon ce mode de réalisation, ladite application peut être réalisée par vernissage et/ou enduction et permet notamment d'obtenir une couche ou un film présentant avantageusement une épaisseur allant de Iµm à 40µm. Au sens de la présente invention, un vernis est une composition non pigmentée, pouvant être composée de liants, de solvants et éventuellement de diluant et/ou d'adjuvants.

Dans un mode de réalisation particulier, l'élément de sécurisation est une encre, notamment une encre pour l'impression offset, comprenant dans sa formulation un polymère dans lequel est intégré un composé fluorescent, ledit polymère étant notamment une résine et particulièrement une résine colophane ou une résine de pin. Au sens de la présente invention, une encre est une composition pigmentée pouvant être utilisée pour l'écriture, le dessin ou encore l'impression.

Cette encre peut être utilisée pour la sécurisation de produit et notamment de document, par application sur ledit produit ou dudit document. Avantageusement, l'utilisation d'une encre pour la sécurisation selon la présente invention permet d'obtenir des couches d'une épaisseur allant de 1 µm à 40 µm. L'application peut être réalisée à la surface dudit produit ou dudit document à sécuriser ou encore sur un élément constitutif de ces derniers. L'élément constitutif peut par exemple être une surface réfléchissante, ladite surface pouvant être métallisée ou non, un film en polyester ou en polypropylène, ledit film étant composé en partie ou totalement de zone transparente et/ou réfléchissante. L'application peut se faire selon des techniques connues de l'homme du métier, comme notamment l'impression offset ou la sérigraphie, techniques qui seront choisies en fonction du produit ou du support du document à sécuriser.

Lorsqu'elles sont utilisées en impression offset, les encres sécurisées selon ce mode de réalisation présentent l'avantage de limiter l'obstruction des têtes d'impression car les composants fluorescents sont moins occlusifs que les pigments ou colorant classiquement utilisés.

Dans un autre mode de réalisation particulier, l'élément de sécurisation est un adhésif comprenant un polymère dans lequel est intégré un composé fluorescent. Cet adhésif peut être utilisé pour la sécurisation de produit et notamment de document par apposition sur ledit produit ou document à sécuriser. A titre d'exemple, les adhésifs ainsi sécurisés pourront être utilisés pour la fabrication d'emballages.

Les produits à sécuriser peuvent être de toute nature. Il peut par exemple s'agir d'emballages, tels que des blisters ou plastique, des documents tels que des documents identitaires, fiduciaires ou administratifs tels que les certificats d'immatriculation.

L'invention sera mieux comprise à l'aide des figures et exemples qui suivent, lesquels se veulent illustratifs et non limitatifs.

### FIGURES

La figure 1 présente le spectre d'absorption des couches de polycarbonate d'une épaisseur d'environ 0,400 mm incorporant respectivement 0,05% et 0,005% en poids de colorant fluorescent.
La figure 2 présente le spectre de fluorescence d'une couche de polycarbonate d'une épaisseur d'environ 0,400 mm incorporant 0,005% en poids de colorant fluorescent.
La figure 3 représente le spectre en transmission d'une couche de polycarbonate d'une épaisseur d'environ 0,400 mm incorporant 0,1% en poids de colorant fluorescent.

### EXEMPLES

Exemple 1 : Préparation d'une couche transparente d'un élément de sécurisation à base de polymère polycarbonate incorporant un colorant fluorescent.

Pour cet exemple d'élément de sécurisation, le polymère choisi est le polycarbonate vendu sous la référence Makrolon® 2658 par la société Bayer.

Le colorant fluorescent choisi est le 2,8-diethyl-5,5-difluoro-10-mesityl-3,7-di(thiophen-2-yl)-5*H-*dipyrrolo[1,2-*c*:2',1'-*f*][1,3,2]diazaborinin-4-ium-5-uide de formule :

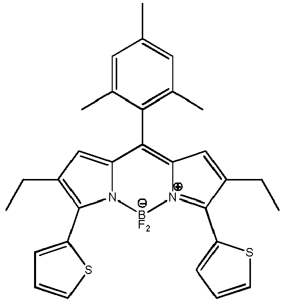

Ce colorant fluorescent absorbe à 590 nm et possède une émission de fluorescence à 641 nm.

Afin de déterminer les quantités de colorants fluorescents à incorporer afin d'obtenir une couche transparente, les quatre compositions tests suivantes ont été préparées :
- Composition 1 : polycarbonate Makrolon® 2658 mélangé à 1 % de colorant fluorescent.
- Composition 2 : polycarbonate Makrolon® 2658 mélangé à 0,05 % de colorant fluorescent.
- Composition 3 : polycarbonate Makrolon® 2658 mélangé à 0,0167 % de colorant fluorescent.
- Composition 4 : polycarbonate Makrolon® 2658 mélangé à 0,005 % de colorant fluorescent.

Les pourcentages sont exprimés en poids par rapport au poids total du colorant fluorescent.

Les quatre compositions ont ensuite été extrudées à l'aide une extrudeuse PLASTI-CORDER® vendue par la Société BRADENDER et présentant les caractéristiques ci-après
- Diamètre de la vis : 25 mm
- Longueur de la vis : 40 D
- Gamme de vitesse : 0-150 rpm
- Torque maximum : 2x90 Nm
- Deux sections de remplissage
- Une section de dégazage
- Plage de température pour l'extrusion : 260°C - 290°C
- Pression d'extrusion : pression ambiante

L'extrudeuse permet d'obtenir des granulés ou des joncs qui vont subir une étape de thermocompression afin d'obtenir des couches d'élément sécuritaire. Les granulés ou joncs ont donc été thermocompressés dans des moules.

L'équipement utilisé pour cette étape est une presse LESCUYER dont les plaques de la presse ont été chauffées à 290 °C et la compression a été réalisée à 50 bars pendant 2 à 3 min.

Après refroidissement, des couches d'élément sécuritaire de 10 cm x 10 cm sont obtenues et présentent une épaisseur d'environ 0,400 mm.

Pour chaque composition, une couche a été préparée selon le descriptif ci-dessus.

Pour chaque couche, les spectres d'absorption et de fluorescence ont été enregistrés.

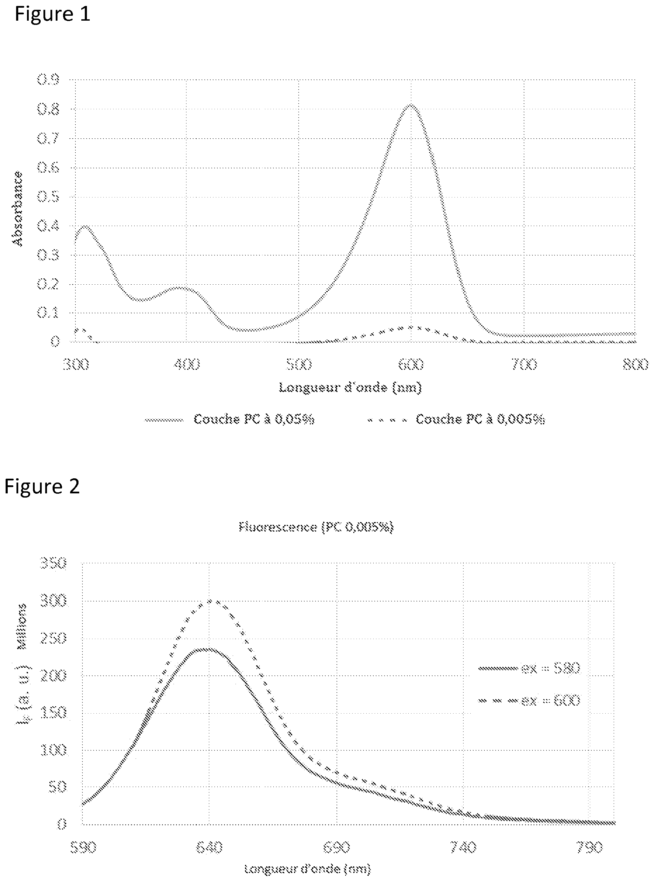

La figure 1 montre les spectres d'absorption des couches de polycarbonate incorporant 0,05% et 0,005% en poids de colorant fluorescent, respectivement. On observe un déplacement (shift) bathochrome de λₘₐₓ par rapport au spectre d'absorption du colorant fluorescent en solution qui présente un λₘₐₓ de 588 nm. Pour cette couche en polycarbonate, les λₘₐₓ d'absorption mesurés sont en effet de 600 nm (0,05 % de colorant fluorescent) et de 599 nm (0,005 % de colorant fluorescent). Ont également été déterminés les absorbances maximales (absₘₐₓ) et la concentration en colorant fluorescent. Cette dernière a été déterminée en utilisant la valeur ε en solution (45000 mol.L⁻¹.cm⁻¹). Les résultats sont récapitulés dans le tableau 2 ci-après.

**Tableau 2 :**

| Echantillon | 0,05 % de colorant fluorescent | 0,005 % de colorant fluorescent |
|---|---|---|
| λₘₐₓ (nm) | 600 | 599 |
| absₘₐₓ | 0,81 | 0,05 |
| Concentration (mol.L⁻¹.cm⁻¹) | 4,51E-05 | 2,84E-06 |

La figure 2 montre les spectres de fluorescence de la couche de polycarbonate contenant 0,005% de colorant fluorescent avec une longueur d'onde d'excitation de 580 nm et 600 nm respectivement. On observe un léger déplacement (shift) hypsochrome de λₘₐₓ par rapport au spectre de fluorescence du colorant fluorescent en solution qui présente un λₘₐₓ de 644 nm. Pour cette couche de polycarbonate, les λₘₐₓ mesurés sont en effet de 641 nm pour une longueur d'onde d'excitation de 600 nm et de 640 nm pour une longueur d'onde d'excitation de 580 nm.

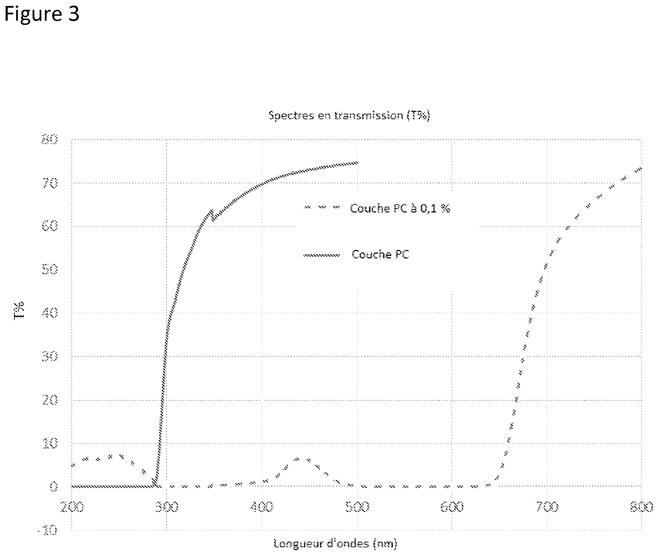

Au niveau de la transmission de lumière, la couche obtenue à partir de la composition 1, avec une concentration en colorant fluorescent de 0,1% en poids par rapport au poids total du polymère ne transmet pas en dessous de 650 nm (cf. figure 3).

La composition 3 permet d'obtenir une couche d'élément sécuritaire fluorescente transparente qui laisse passer la lumière permettant ainsi un changement de couleur en fonction des faisceaux lumineux incidents.

D'autres essais ont été réalisés en faisant varier les colorants fluorescents utilisés mais tout en gardant les mêmes concentrations. On obtient ainsi des films présentant des longueurs d'ondes d'absorbance allant de 516 nm à 727 nm et des longueurs d'ondes de fluorescences allant de 527 nm à 742 nm.

Exemple 2 : Préparation d'une couche transparente d'un élément de sécurisation à base de polymère polyuréthane thermoplastique incorporant un colorant fluorescent.

Pour cet exemple, le polymère choisi est le polyuréthane thermoplastique vendu sous la référence Desmopan® DP 9386A par la société Bayer.

Le colorant fluorescent choisi est le 2,8-diethyl-5,5-difluoro-1,3,7,9-tetramethyl-10-(perfluorophenyl)-5*H*-dipyrrolo[1,2-c:2',1'-*f*][1,3,2] diazaborinin-4-ium-5uide de formule ci-dessous (O.V.M 6):

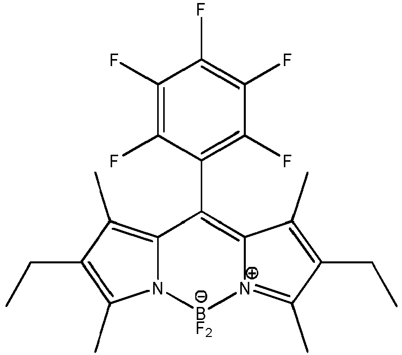

Le colorant choisi absorbe à 544 nm et possède une émission de fluorescence à 558 nm.

Pour obtenir une couche fluorescente transparente, trois compositions tests ont ainsi été préparées :
- Composition 1: polyuréthane thermoplastique Desmopan® DP 9386A mélangé à 0,05 % de colorant fluorescent.
- Composition 2 : polyuréthane thermoplastique Desmopan® DP 9386A mélangé à 0,0167 % de colorant fluorescent.
- Composition 3 : polyuréthane thermoplastique Desmopan® DP 9386A mélangé à 0,005 % de colorant fluorescent.

Les pourcentages sont exprimés en poids par rapport au poids total du colorant fluorescent.

Pour chaque composition, une couche a été préparée selon un mode opératoire identique à celui de l'exemple 1.

Les trois compositions préparées à base de polymère polyuréthane thermoplastique permettent d'obtenir des couches d'élément sécuritaire présentant les mêmes aspects et la même transparence que celles obtenues avec les compositions préparées à base de polymère polycarbonate.

Les analyses spectrophotométriques des différentes couches d'élément sécuritaire obtenues montrent que l'incorporation du colorant fluorescent dans le polyuréthane thermoplastique n'altère pas ses performances en termes d'absorption et d'émission de fluorescence.

On démontre ainsi les possibilités d'incorporation des colorants fluorescents de la présente invention.

## Revendications

1. Utilisation d'un ou plusieurs composé(s) de la famille des 4-bora-3a,4a-diaza-s-indacènes pour la préparation d'un élément de sécurisation d'un produit, notamment d'un document, ledit élément de sécurisation comprenant un polymère et le ou lesdits composé(s) étant incorporé(s) dans ledit polymère et sont choisis parmi ceux de la formule I: 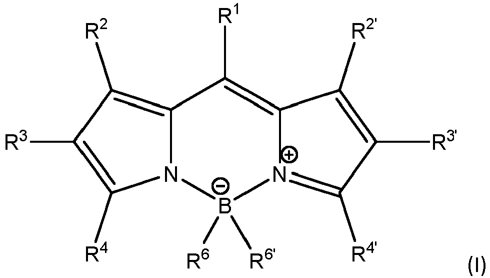 dans laquelle,
**R¹** est un phényle substitué par un ou plusieurs groupements choisi(s) parmi le méthyle, fluoro, hydroxy, acétyle et méthacrylate, de préférence parmi méthyle, fluoro, hydroxy et acétyle et de préférence encore parmi méthyle ou fluoro ;
**R²** et **R^{2'}** sont indépendamment choisis parmi hydrogène et alkyle en C1 à C2 ;
**R³** et **R^{3'}** sont indépendamment choisis parmi hydrogène, aryle, hétéroaryle, cycloalkyle, alkyle, alcényle, alcynyle, lesdits aryle, hétéroaryle, cycloalkyle, alkyle, alcényle et alcynyle étant éventuellement substitués par un ou plusieurs groupements choisi(s) parmi alkyle en C1 à C4, aryle, hydroxy et ferrocène, ledit groupement aryle étant éventuellement substitué par un ou plusieurs groupements choisi(s) parmi aryle, alkyle en C1 à C2, halogène, hydroxy, diméthylamino, nitro, ledit aryle étant éventuellement substitué par un groupement alkyle en C1 à C2 ;
**R⁴** et **R^{4'}** sont indépendamment choisis parmi aryle, hétéroaryle, cycloalkyle, alkyle, alcényle, lesdits aryle, hétéroaryle, cycloalkyle, alkyle et alcényle étant éventuellement substitués par un ou plusieurs groupements choisi(s) parmi alkyle en C1 à C3, aryle, hydroxy et ferrocène, ledit groupement aryle étant éventuellement substitué par un ou plusieurs groupements choisi(s) parmi aryle, alkyle en C1 à C2, halogène, hydroxy, diméthylamino, nitro, ledit aryle étant éventuellement substitué par un groupement alkyle en C1 à C2 ;
**R⁵** est alkyle en C1 à C4 ou alcényle en C2 à C4.
**R⁶** et **R^{6'}** sont indépendamment choisis parmi halogènes, alkyle en C1 à C4, alcényle en C2 à C4 ou aryl, ledit aryl étant éventuellement substitué par un ou plusieurs groupements choisi(s) parmi alkyle en C1 à C2, hydroxy, R5COO- et halogène.

2. Utilisation selon la revendication 1, **caractérisée en ce que** le ou les composé(s) de la famille des 4-bora-3a,4a-diaza-s-indacènes sont choisis parmi : 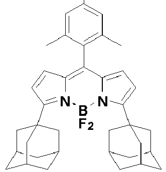 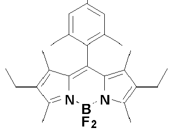 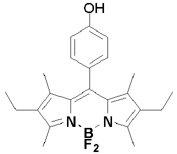 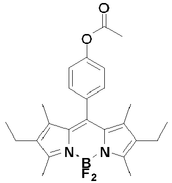 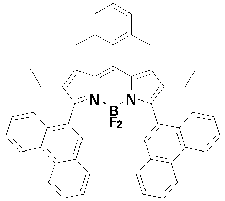 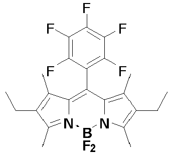 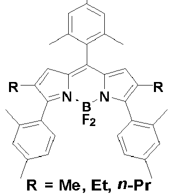 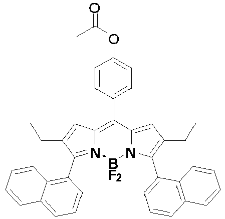 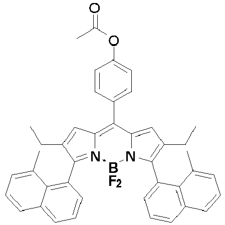 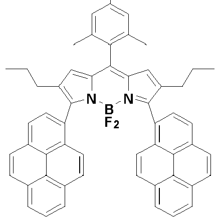 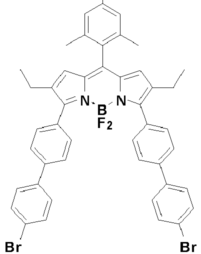 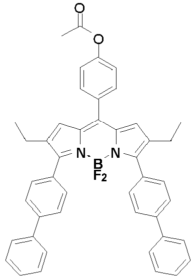 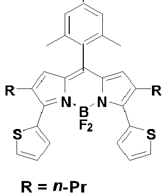 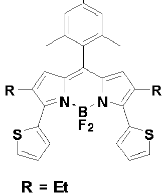 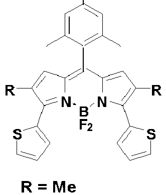 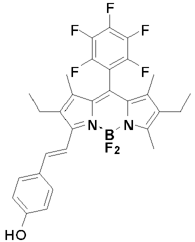 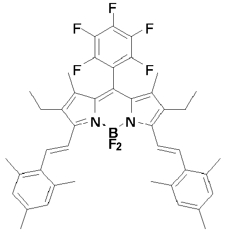 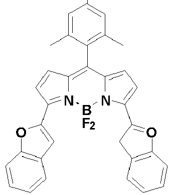 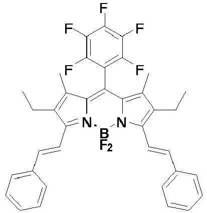 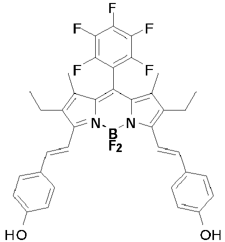 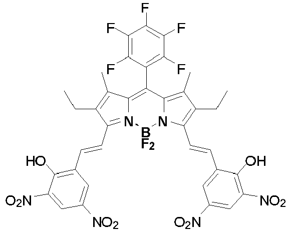 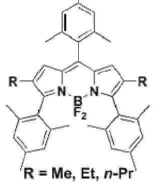 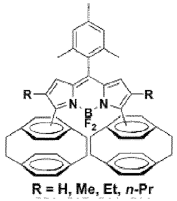 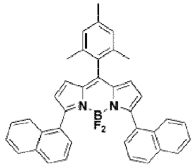 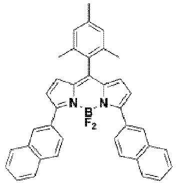 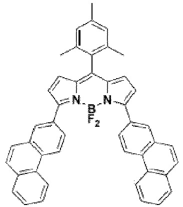 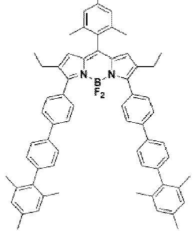 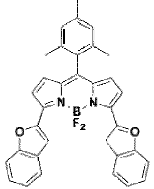 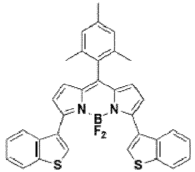 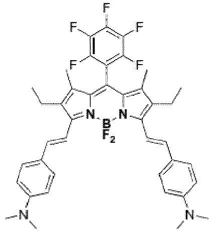 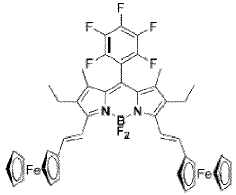 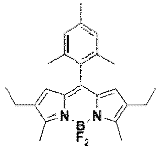 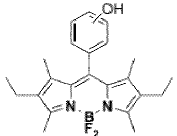 **OH en position o, *m* ou *p***

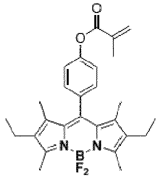

3. Utilisation selon l'une quelconque des revendications précédentes, **caractérisée en ce que** le polymère est choisi parmi le polycarbonate, le polyester, le polystyrène, le polyéthylène, le polypropylène, le polyéthylène téréphtalate, le polyacrylate, le polyméthacrylate, le poly(chlorure de vinyle), les polyamides, les polyaramides, l'acétate de vinyléthylène (EVA), le polyuréthane, le polyuréthane thermoplastique (TPU), le cyanoacrilate, les résines colophane, les résines de pin, les résines photopolymérisables ou leurs mélanges.

4. Utilisation selon la revendication 3, **caractérisée en ce que** le polymère est choisi parmi le polycarbonate, le polyester, le polypropylène, le polyuréthane thermoplastique ou les résines photopolymérisables, de préférence le polycarbonate et le polyuréthane thermoplastique ou leurs mélanges.

5. Utilisation selon la revendication 4, **caractérisée en ce que** le polymère est le polycarbonate le polyester, le polypropylène ou leurs mélanges.

6. Utilisation selon l'une quelconque des revendications précédentes, **caractérisée en ce que** le produit est un document identitaire, fiduciaire ou administratif.

7. Utilisation selon l'une quelconque des revendications 1 à 6, **caractérisée en ce que** l'élément de sécurisation se présente sous la forme d'une couche.

8. Utilisation selon l'une quelconque des revendications 1 à 6, **caractérisée en ce que** l'élément de sécurisation est une encre ou un vernis.

9. Utilisation selon l'une quelconque des revendications 1 à 6, **caractérisée en ce que** l'élément de sécurisation est un adhésif.

10. Elément de sécurisation d'un produit, notamment d'un document, ledit élément de sécurisation comprenant un polymère et un ou plusieurs composé(s) de la famille des 4-bora-3a,4a-diaza-s-indacènes, le ou lesdits composé(s) étant incorporé(s) dans ledit polymère et sont choisis parmi ceux de la formule I : 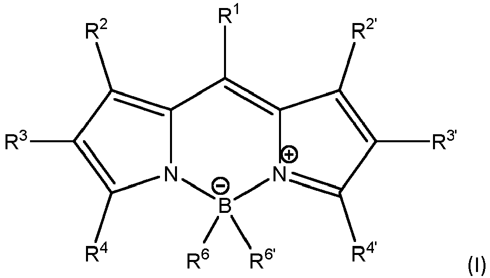 dans laquelle,
**R¹** est un phényle substitué par un ou plusieurs groupements choisi(s) parmi le méthyle, fluoro, hydroxy, acétyle et méthacrylate, de préférence parmi méthyle, fluoro, hydroxy et acétyle et de préférence encore parmi méthyle ou fluoro ;
**R²** et **R^{2'}** sont indépendamment choisis parmi hydrogène et alkyle en C1 à C2 ;
**R³** et **R^{3'}** sont indépendamment choisis parmi hydrogène, aryle, hétéroaryle, cycloalkyle, alkyle, alcényle, alcynyle, lesdits aryle, hétéroaryle, cycloalkyle, alkyle, alcényle et alcynyle étant éventuellement substitués par un ou plusieurs groupements choisi(s) parmi alkyle en C1 à C4, aryle, hydroxy et ferrocène, ledit groupement aryle étant éventuellement substitué par un ou plusieurs groupements choisi(s) parmi aryle, alkyle en C1 à C2, halogène, hydroxy, diméthylamino, nitro, ledit aryle étant éventuellement substitué par un groupement alkyle en C1 à C2 ;
**R⁴** et **R^{4'}** sont indépendamment choisis parmi aryle, hétéroaryle, cycloalkyle, alkyle, alcényle, lesdits aryle, hétéroaryle, cycloalkyle, alkyle et alcényle étant éventuellement substitués par un ou plusieurs groupements choisi(s) parmi alkyle en C1 à C3, aryle, hydroxy et ferrocène, ledit groupement aryle étant éventuellement substitué par un ou plusieurs groupements choisi(s) parmi aryle, alkyle en C1 à C2, halogène, hydroxy, diméthylamino, nitro, ledit aryle étant éventuellement substitué par un groupement alkyle en C1 à C2 ;
**R⁵** est alkyle en C1 à C4 ou alcényle en C2 à C4.
**R⁶** et **R^{6'}** sont indépendamment choisis parmi halogènes, alkyle en C1 à C4, alcényle en C2 à C4 ou aryl, ledit aryl étant éventuellement substitué par un ou plusieurs groupements choisi(s) parmi alkyle en C1 à C2, hydroxy, R5COO- et halogène.

11. Elément de sécurisation selon la revendication 10, **caractérisé en ce que** le ou les composé(s) de la famille des 4-bora-3a,4a-diaza-s-indacènes sont choisis parmi : 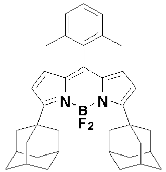 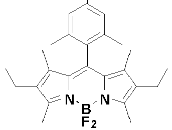 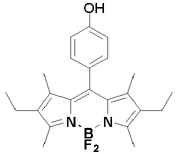 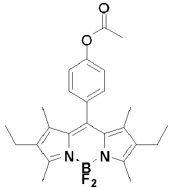 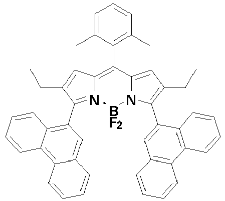 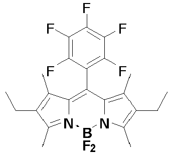 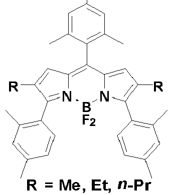 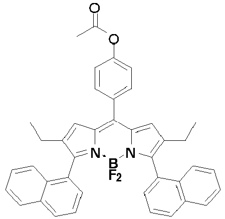 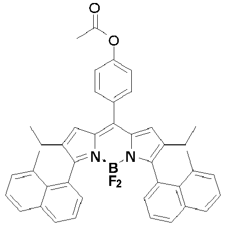 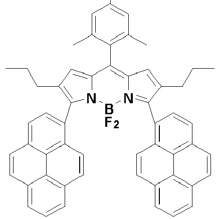 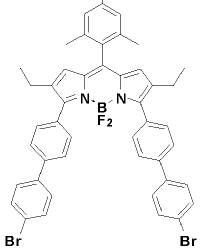 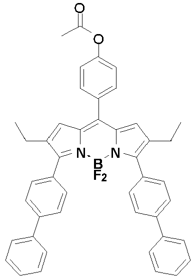 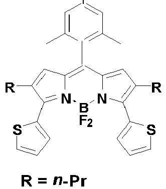 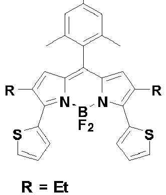 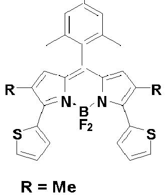 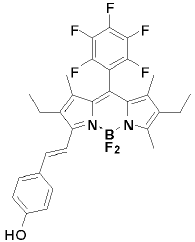 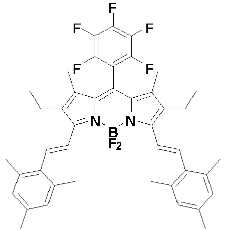 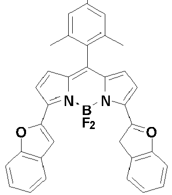 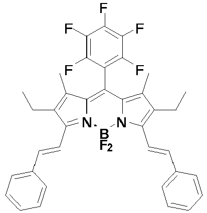 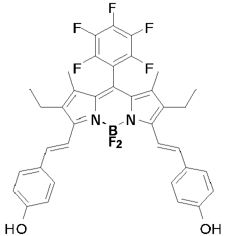 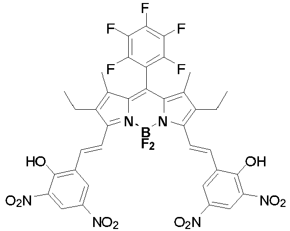 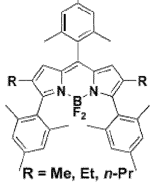 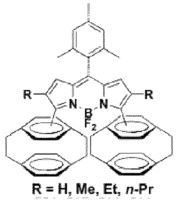 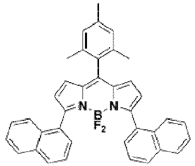 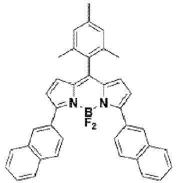 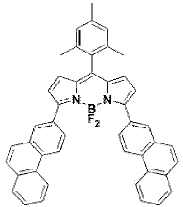 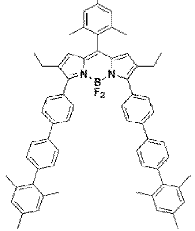 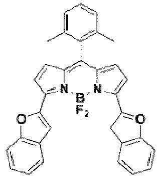 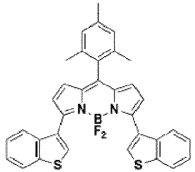 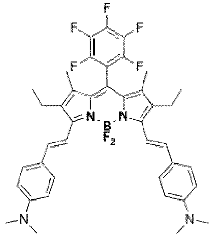 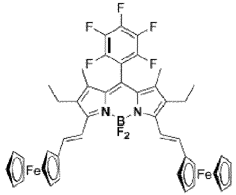 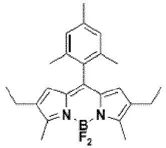 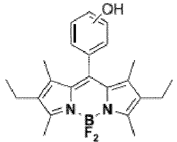 **OH en position o, *m* ou *p***

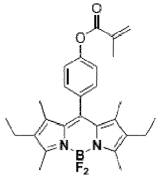

12. Elément de sécurisation selon l'une des revendications 10 et 11, **caractérisé en ce que** le polymère est choisi parmi le polycarbonate, le polyester, le polystyrène, le polyéthylène, le polypropylène, le polyéthylène téréphtalate, le polyacrylate, le polyméthacrylate, le poly(chlorure de vinyle), les polyamides, les polyaramides, l'acétate de vinyléthylène (EVA), le polyuréthane, le polyuréthane thermoplastique (TPU), ou le cyanoacrilate, les résines colophane, les résines de pin, les résines photopolymérisables ou leurs mélanges.

13. Elément de sécurisation selon la revendication 12, **caractérisé en ce que** le polymère est choisi parmi le polycarbonate, le polyester, le polypropylène le polyuréthane thermoplastique et les résines photopolymérisables, de préférence parmi le polycarbonate et le polyuréthane thermoplastique.

14. Elément de sécurisation selon la revendication 13, **caractérisé en ce que** le polymère est le polycarbonate, le polyester, le polypropylène ou leurs mélanges.

15. Elément de sécurisation selon l'une des revendications 10 à 14, **caractérisé en ce qu'**il se présente sous la forme d'une couche.

16. Elément de sécurisation selon la revendication 15, **caractérisé en ce que** la couche présente une épaisseur allant de 0,050 mm à 0,800 mm, préférentiellement de 0,200 mm à 0,600 mm et encore plus préférentielle une épaisseur d'environ 0,400 mm.

17. Elément de sécurisation selon la revendication 15, **caractérisé en ce que** la couche est un film.

18. Elément de sécurisation selon les revendications 12 et 15, **caractérisé en ce que** le polymère est le polycarbonate et **en ce qu'**il se présente sous la forme d'une couche d'une épaisseur allant de 100 µm à 800 µm.

19. Elément de sécurisation selon les revendications 12 et 15, **caractérisé en ce que** le polymère est le polypropylène et **en ce qu'**il se présente sous la forme d'une couche d'une épaisseur allant de 15 µm à 100 µm.

20. Elément de sécurisation selon l'une quelconque des revendications 10 à 14, **caractérisé en ce que** l'élément de sécurisation est une encre ou vernis.

21. Elément de sécurisation selon l'une quelconque des revendications 10 à 14, **caractérisé en ce que** l'élément de sécurisation est un adhésif.

22. Procédé de sécurisation d'un produit, notamment d'un document comprenant une étape de préparation d'un élément de sécurisation tel que défini selon l'une quelconque des revendications 10 à 21, ledit élément de sécurisation pouvant constituer le produit et notamment le document en tant que tel, ou être appliqué audit produit et notamment audit document à sécuriser.

23. Procédé de sécurisation selon la revendication 20, **caractérisé en ce que** l'application dudit élément de sécurisation se fait sur au moins une partie dudit produit, notamment dudit document, à sécuriser.

24. Procédé de sécurisation selon les revendications 20 ou 21, **caractérisé en ce que** le produit à sécuriser est un document identitaire, fiduciaire ou administratif.

## Patentansprüche

1. Verwendung einer oder mehrerer Verbindung(en) aus der Familie der 4-Bora-3a,4a-diaza-s-indazene zur Herstellung eines Sicherungselements für ein Produkt, insbesondere ein Dokument, wobei das Sicherungselement ein Polymer umfasst und die Verbindung(en) in das Polymer eingebaut ist/sind und aus denen der Formel I ausgewählt ist/sind: 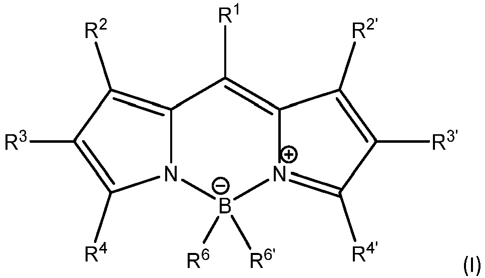 worin
**R¹** ein Phenyl ist, das mit einer oder mehreren Gruppen substituiert ist, die ausgewählt sind aus Methyl, Fluor, Hydroxy, Acetyl und Methacrylat, vorzugsweise aus Methyl, Fluor, Hydroxy und Acetyl, und weiter bevorzugt aus Methyl oder Fluor;
**R²** und **R^{2'}** unabhängig voneinander ausgewählt sind aus Wasserstoff und C₁-C₂-Alkyl;
**R³** und **R^{3'}** unabhängig voneinander ausgewählt sind aus Wasserstoff, Aryl, Heteroaryl, Cycloalkyl, Alkyl, Alkenyl, Alkinyl, wobei Aryl, Heteroaryl, Cycloalkyl, Alkyl, Alkenyl und Alkinyl gegebenenfalls mit einer oder mehreren Gruppen, ausgewählt aus C₁-C₄-Alkyl, Aryl, Hydroxy und Ferrocen substituiert sind, wobei die Arylgruppe gegebenenfalls mit einer oder mehreren Gruppen, ausgewählt aus Aryl, C₁-C₂-Alkyl, Halogen, Hydroxy, Dimethylamino, Nitro, substituiert ist, wobei das Aryl gegebenenfalls mit einer C₁-C₂-Alkylgruppe substituiert ist;
**R⁴** und **R^{4'}** unabhängig voneinander ausgewählt sind aus Aryl, Heteroaryl, Cycloalkyl, Alkyl, Alkenyl, wobei Aryl, Heteroaryl, Cycloalkyl, Alkyl und Alkenyl gegebenenfalls mit einer oder mehreren Gruppen, ausgewählt aus C₁-C₃-Alkyl, Aryl, Hydroxy und Ferrocen, substituiert sind, wobei die Arylgruppe gegebenenfalls mit einer oder mehreren Gruppen, ausgewählt aus Aryl, C₁-C₂-Alkyl, Halogen, Hydroxy, Dimethylamino, Nitro, substituiert ist, wobei das Aryl gegebenenfalls mit einer C₁-C₂-Alkylgruppe substituiert ist;
**R⁵** C₁-C₄-Alkyl oder C₂-C₄-Alkenyl ist.
**R⁶** und **R^{6'}** unabhängig voneinander ausgewählt sind aus Halogen, C₁-C₄-Alkyl, C₂-C₄-Alkenyl oder Aryl, wobei das Aryl gegebenenfalls mit einer oder mehreren Gruppen, ausgewählt aus C₁-C₂-Alkyl, Hydroxy, R₅COO⁻ und Halogen, substituiert ist.

2. Verwendung nach Anspruch 1, **dadurch gekennzeichnet, dass** die Verbindung(en) der 4-Bora-3a,4a-diaza-s-indazen-Familie ausgewählt ist/sind aus: 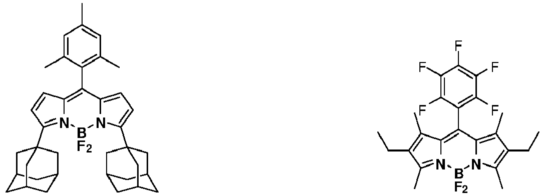 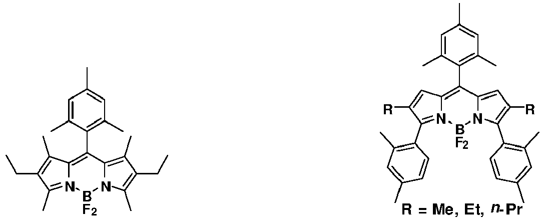 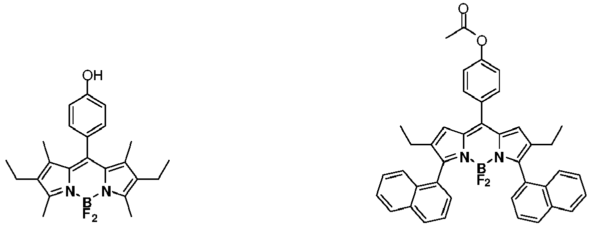 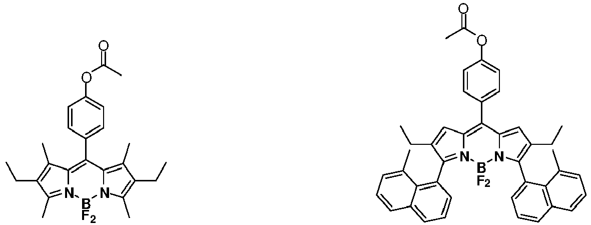 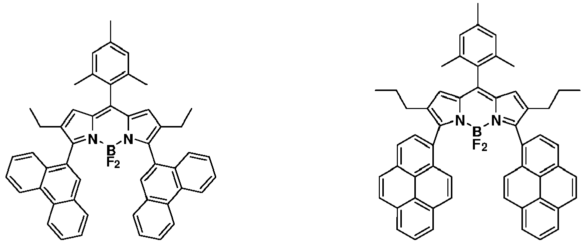 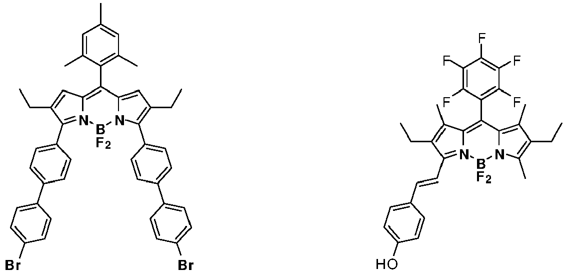 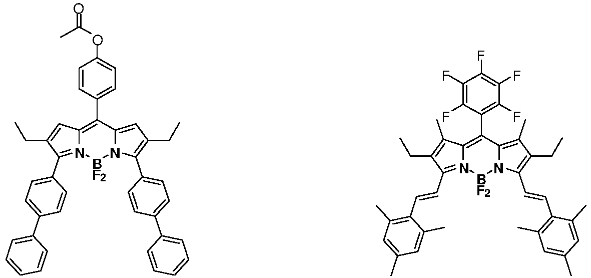 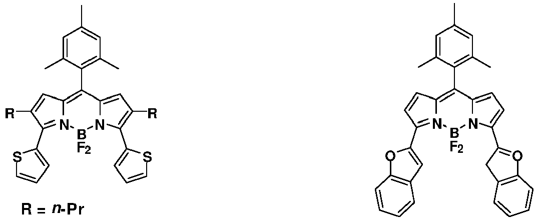 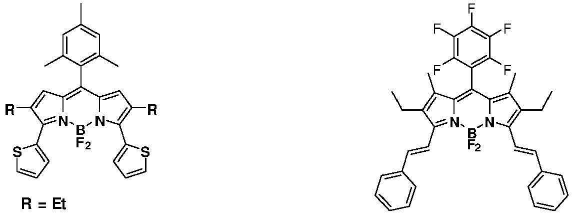 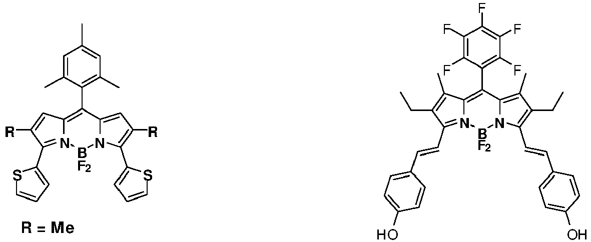 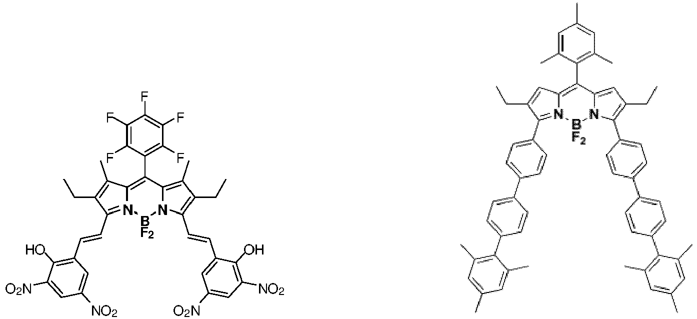 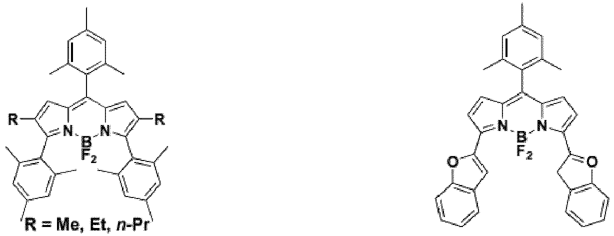 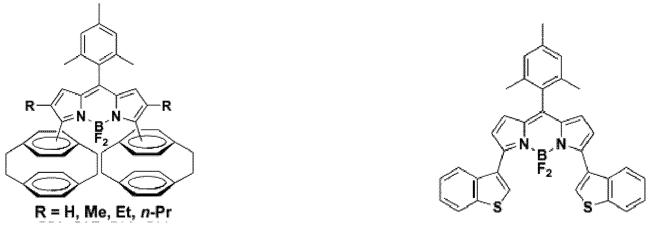 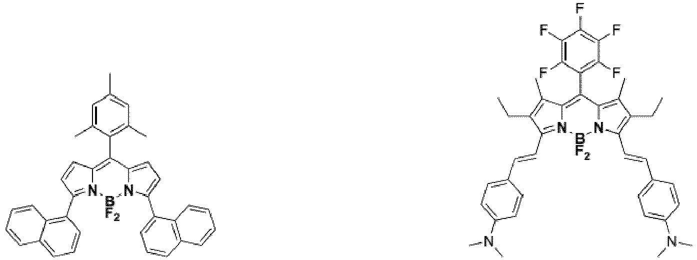 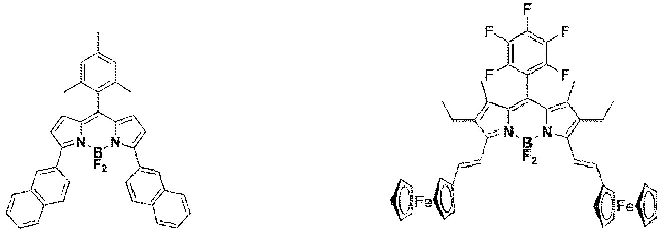 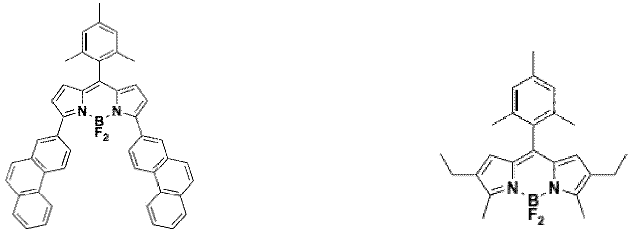 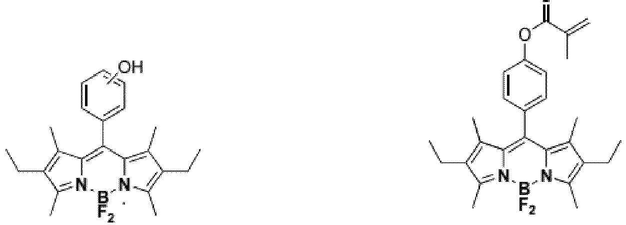 OH in Position o, m oder p

3. Verwendung nach einem der vorhergehenden Ansprüche, **dadurch gekennzeichnet, dass** das Polymer ausgewählt ist aus Polycarbonat, Polyester, Polystyrol, Polyethylen, Polypropylen, Polyethylenterephthalat, Polyacrylat, Polymethacrylat, Poly(vinylchlorid), Polyamiden, Polyaramiden, Ethylen-Vinylacetat (EVA), Polyurethan, thermoplastischem Polyurethan (TPU), Cyanacrylat, Kolophoniumharzen, Kiefernharzen, photopolymerisierbaren Harzen oder Mischungen davon.

4. Verwendung nach Anspruch 3, **dadurch gekennzeichnet, dass** das Polymer ausgewählt ist aus Polycarbonat, Polyester, Polypropylen, thermoplastischem Polyurethan oder photopolymerisierbaren Harzen, vorzugsweise Polycarbonat und thermoplastisches Polyurethan, oder Mischungen davon.

5. Verwendung nach Anspruch 4, **dadurch gekennzeichnet, dass** das Polymer Polycarbonat, Polyester, Polypropylen oder Mischungen davon ist.

6. Verwendung nach einem der vorhergehenden Ansprüche, **dadurch gekennzeichnet, dass** das Produkt ein Ausweisdokument, Treuhanddokument oder Verwaltungsdokument ist.

7. Verwendung nach einem der Ansprüche 1 bis 6, **dadurch gekennzeichnet, dass** das Sicherungselement in Form einer Schicht vorliegt.

8. Verwendung nach einem der Ansprüche 1 bis 6, **dadurch gekennzeichnet, dass** das Sicherungselement eine Tinte oder ein Lack ist.

9. Verwendung nach einem der Ansprüche 1 bis 6, **dadurch gekennzeichnet, dass** das Sicherungselement ein Klebstoff ist.

10. Sicherungselement eines Produkts, insbesondere eines Dokuments, wobei das Sicherungselement ein Polymer und eine oder mehrere Verbindung(en) der Familie der 4-Bora-3a,4a-diaza-s-indazene umfasst, wobei die Verbindung(en) in das Polymer eingebaut ist/sind und aus denen der Formel I ausgewählt ist/sind: 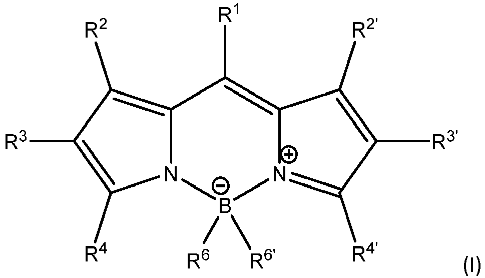 worin
**R¹** ein Phenyl ist, das mit einer oder mehreren Gruppen substituiert ist, die ausgewählt sind aus Methyl, Fluor, Hydroxy, Acetyl und Methacrylat, vorzugsweise aus Methyl, Fluor, Hydroxy und Acetyl, und weiter bevorzugt aus Methyl oder Fluor;
**R²** und **R^{2'}** unabhängig voneinander ausgewählt sind aus Wasserstoff und C₁-C₂-Alkyl;
**R³** und **R^{3'}** unabhängig voneinander ausgewählt sind aus Wasserstoff, Aryl, Heteroaryl, Cycloalkyl, Alkyl, Alkenyl, Alkinyl, wobei Aryl, Heteroaryl, Cycloalkyl, Alkyl, Alkenyl und Alkinyl gegebenenfalls mit einer oder mehreren Gruppen, ausgewählt aus C₁-C₄-Alkyl, Aryl, Hydroxy und Ferrocen substituiert sind, wobei die Arylgruppe gegebenenfalls mit einer oder mehreren Gruppen, ausgewählt aus Aryl, C₁-C₂-Alkyl, Halogen, Hydroxy, Dimethylamino, Nitro, substituiert ist, wobei das Aryl gegebenenfalls mit einer C₁-C₂-Alkylgruppe substituiert ist;
**R⁴** und **R^{4'}** unabhängig voneinander ausgewählt sind aus Aryl, Heteroaryl, Cycloalkyl, Alkyl, Alkenyl, wobei Aryl, Heteroaryl, Cycloalkyl, Alkyl und Alkenyl gegebenenfalls mit einer oder mehreren Gruppen, ausgewählt aus C₁-C₃-Alkyl, Aryl, Hydroxy und Ferrocen, substituiert sind, wobei die Arylgruppe gegebenenfalls mit einer oder mehreren Gruppen, ausgewählt aus Aryl, C₁-C₂-Alkyl, Halogen, Hydroxy, Dimethylamino, Nitro, substituiert ist, wobei das Aryl gegebenenfalls mit einer C₁-C₂-Alkylgruppe substituiert ist;
**R⁵** C₁-C₄-Alkyl oder C₂-C₄-Alkenyl ist.
**R⁶** und **R^{6'}** unabhängig voneinander ausgewählt sind aus Halogen, C₁-C₄-Alkyl, C₂-C₄-Alkenyl oder Aryl, wobei das Aryl gegebenenfalls mit einer oder mehreren Gruppen, ausgewählt aus C₁-C₂-Alkyl, Hydroxy, R₅COO⁻ und Halogen, substituiert ist.

11. Sicherungselement nach Anspruch 10, **dadurch gekennzeichnet, dass** die Verbindung(en) der 4-Bora-3a,4a-diaza-s-indazen-Familie ausgewählt ist/sind aus: 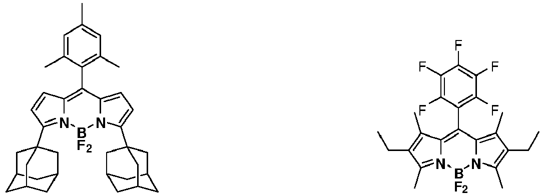 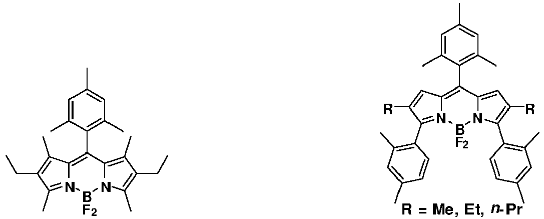 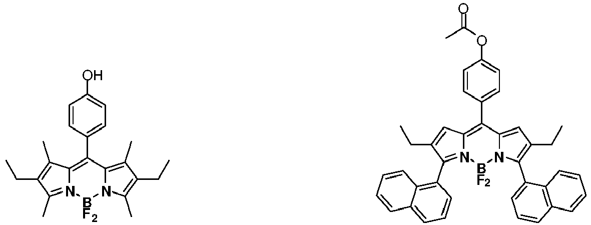 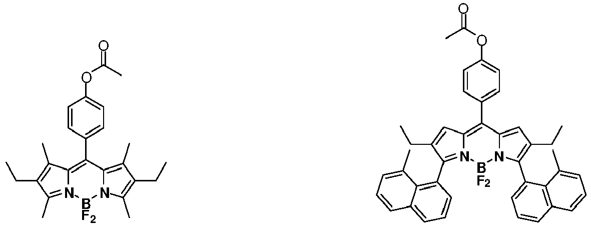 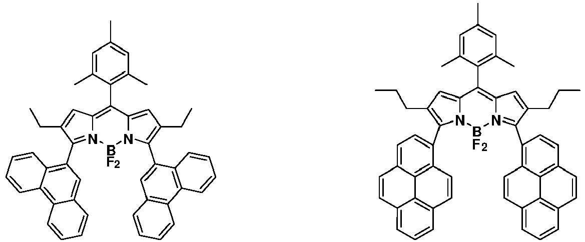 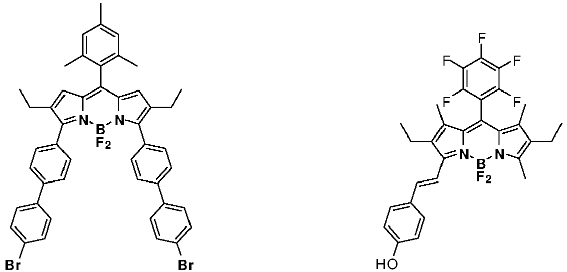 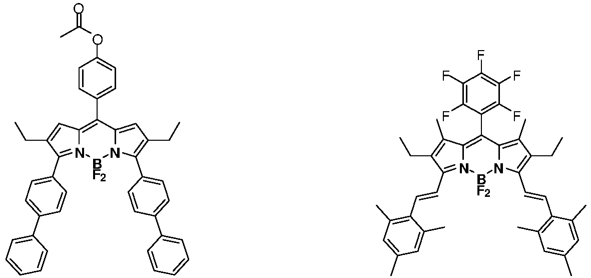 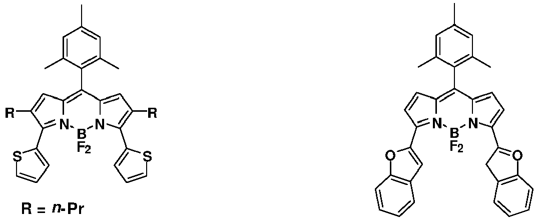 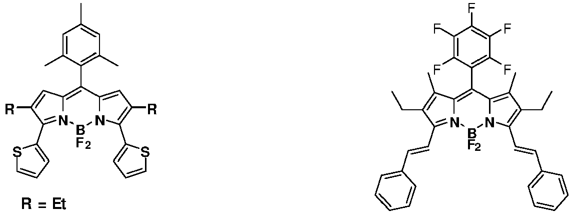 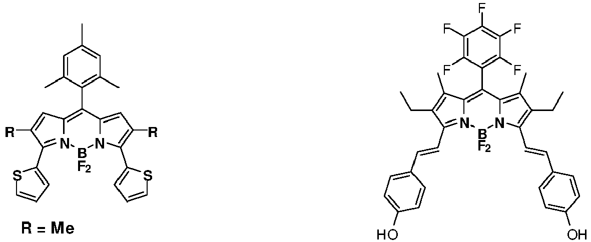 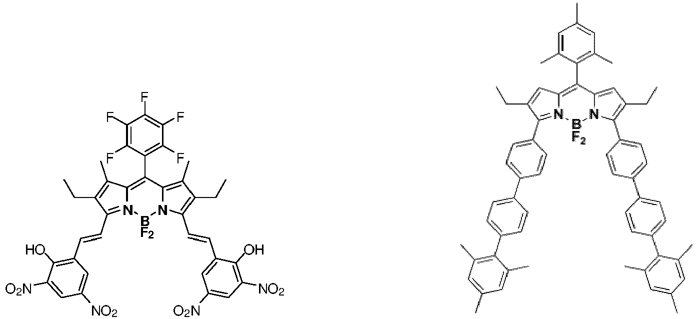 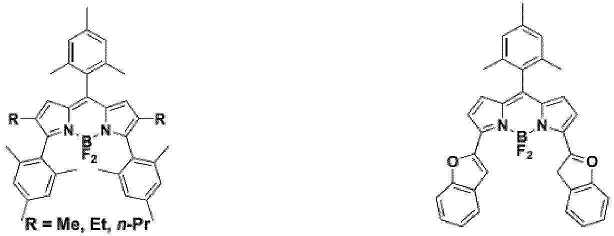 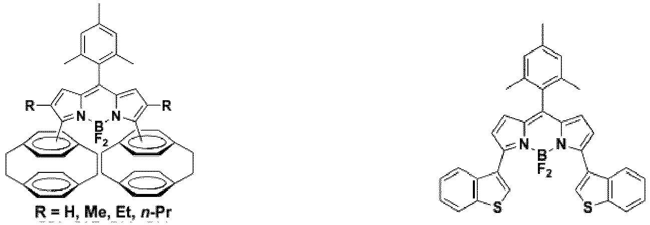 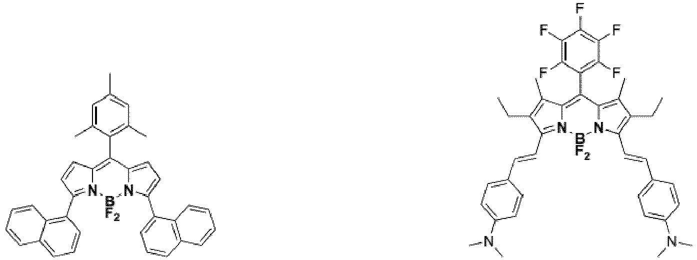 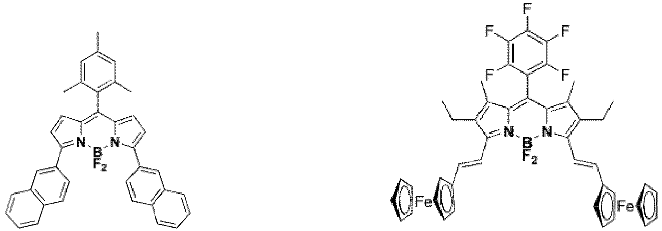 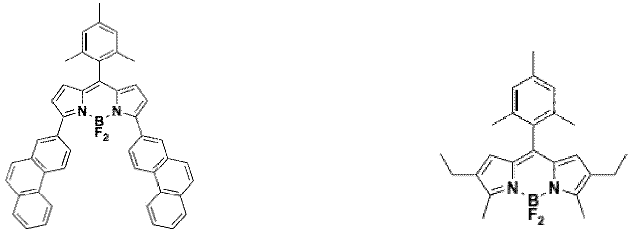 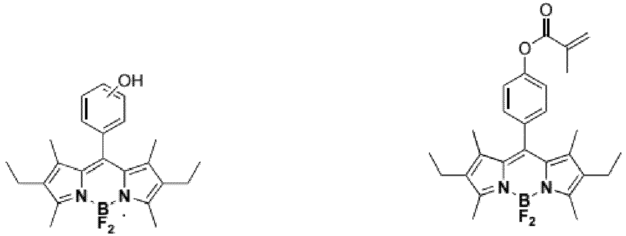 OH in Position o, m oder p

12. Sicherungselement nach einem der Ansprüche 10 und 11, **dadurch gekennzeichnet, dass** das Polymer ausgewählt ist aus Polycarbonat, Polyester, Polystyrol, Polyethylen, Polypropylen, Polyethylenterephthalat, Polyacrylat, Polymethacrylat, Poly(vinylchlorid), Polyamiden, Polyaramiden, Ethylen-Vinylacetat (EVA), Polyurethan, thermoplastischem Polyurethan (TPU) oder Cyanacrylat, Kolophoniumharzen, Kiefernharzen, photopolymerisierbaren Harzen oder Mischungen davon.

13. Sicherungselement nach Anspruch 12, **dadurch gekennzeichnet, dass** das Polymer ausgewählt ist aus Polycarbonat, Polyester, Polypropylen, thermoplastischem Polyurethan und photopolymerisierbaren Harzen, vorzugsweise aus Polycarbonat und thermoplastischem Polyurethan.

14. Sicherungselement nach Anspruch 13, **dadurch gekennzeichnet, dass** das Polymer Polycarbonat, Polyester, Polypropylen oder Mischungen davon ist.

15. Sicherungselement nach einem der Ansprüche 10 bis 14, **dadurch gekennzeichnet, dass** es in Form einer Schicht vorliegt.

16. Sicherungselement nach Anspruch 15, **dadurch gekennzeichnet, dass** die Schicht eine Dicke von 0,050 mm bis 0,800 mm, vorzugsweise von 0,200 mm bis 0,600 mm und weiter bevorzugt eine Dicke von etwa 0,400 mm aufweist.

17. Sicherungselement nach Anspruch 15, **dadurch gekennzeichnet, dass** die Schicht ein Film ist.

18. Sicherungselement nach den Ansprüchen 12 und 15, **dadurch gekennzeichnet, dass** das Polymer Polycarbonat ist und dass es in Form einer Schicht mit einer Dicke von 100 µm bis 800 µm vorliegt.

19. Sicherungselement nach den Ansprüchen 12 und 15, **dadurch gekennzeichnet, dass** das Polymer Polypropylen ist und dass es in Form einer Schicht mit einer Dicke von 15 µm bis 100 µm vorliegt.

20. Sicherungselement nach einem der Ansprüche 10 bis 14, **dadurch gekennzeichnet, dass** das Sicherungselement eine Tinte oder ein Lack ist.

21. Sicherungselement nach einem der Ansprüche 10 bis 14, **dadurch gekennzeichnet, dass** das Sicherungselement ein Klebstoff ist.

22. Verfahren zur Sicherung eines Produkts, insbesondere eines Dokuments, das einen Schritt der Herstellung eines Sicherungselements, wie in einem der Ansprüche 10 bis 21 definiert, umfasst, wobei das Sicherungselement das Produkt und insbesondere das Dokument als solches bilden oder auf das zu sichernde Produkt und insbesondere auf das Dokument aufgebracht werden kann.

23. Verfahren zur Sicherung nach Anspruch 20, **dadurch gekennzeichnet, dass** die Anbringung des Sicherungselements auf mindestens einem Teil des zu sichernden Produkts, insbesondere des Dokuments, erfolgt.

24. Verfahren zur Sicherung nach den Ansprüchen 20 oder 21, **dadurch gekennzeichnet, dass** das zu sichernde Produkt ein Ausweisdokument, Treuhanddokument oder Verwaltungsdokument ist.

## Claims

1. Use of one or more compounds of the 4-bora-3a,4a-diaza-s-indacene family for the preparation of a securing element for a product, in particular a document, said securing element comprising a polymer and said compound or compounds being incorporated in said polymer and are chosen from those of formula I: 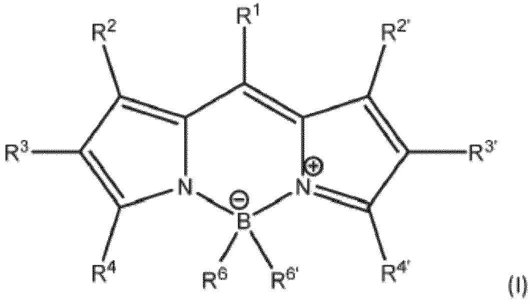 wherein,
**R¹** is a phenyl substituted by one or several groups chosen from methyl, fluoro, hydroxy, acetyl and methacrylate, preferably from methyl, fluoro, hydroxy and acetyl, and more preferably from methyl or fluoro;
**R²** and **R^{2'}** are independently chosen from hydrogen and C1 to C2 alkyl;
**R³** and **R³** are independently chosen from hydrogen, aryl, heteroaryl, cycloalkyl, alkyl, alkenyl, alkynyl, said aryl, heteroaryl, cycloalkyl, alkyl, alkenyl and alkynyl being optionally substituted by one or several groups chosen from C1 to C4 alkyl, aryl, hydroxy and ferrocene, said aryl group being optionally substituted by one or several groups chosen from aryl, C1 to C2 alkyl, halogen, hydroxy, dimethylamino, nitro, said aryl being optionally substituted by a C1 to C2 alkyl group;
**R⁴** and **R^{4'}** are independently chosen from aryl, heteroaryl, cycloalkyl, alkyl, alkenyl, said aryl, heteroaryl, cycloalkyl, alkyl and alkenyl being optionally substituted by one or several groups chosen from C1 to C3 alkyl, aryl, hydroxy and ferrocene, said aryl group being optionally substituted by one or several groups chosen from aryl, C1 to C2 alkyl, halogen, hydroxy, dimethylamino, nitro, said aryl being optionally substituted by a C1 to C2 alkyl group;
**R⁵** is C1 to C4 alkyl or C2 to C4 alkenyl.
**R⁶** and **R^{6'}** are independently chosen from halogens, C1 to C4 alkyl, C2 to C4 alkenyl or aryl, said aryl being optionally substituted by one or several groups chosen from C1 to C2 alkyl, hydroxy, R5COO- and halogen.

2. Use according to claim 1, **characterised in that** the compound or compounds of the 4-bora-3a,4a-diaza-s-indacene family are chosen from: 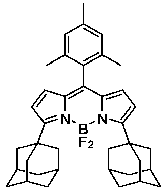 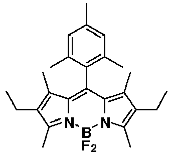 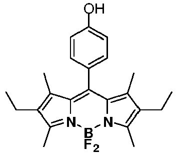 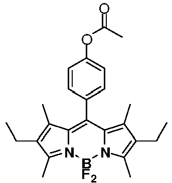 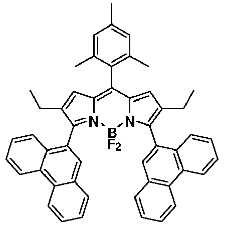 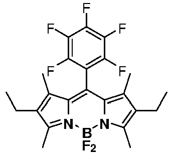 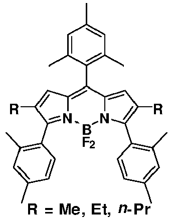 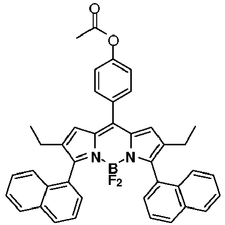 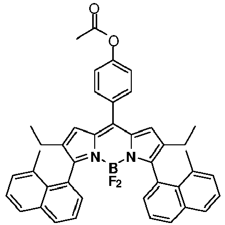 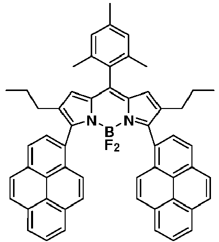 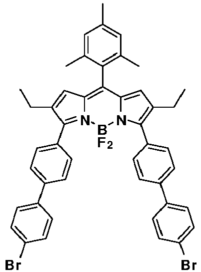 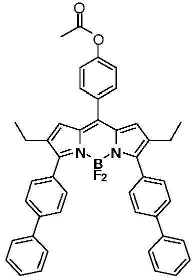 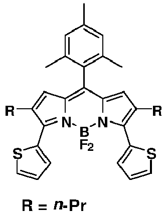 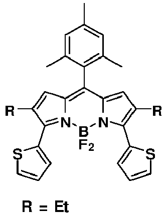 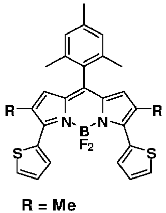 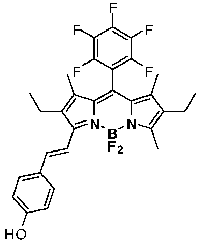 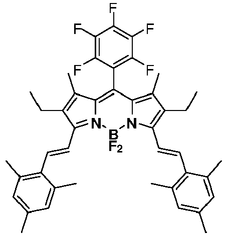 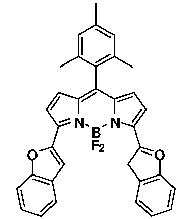 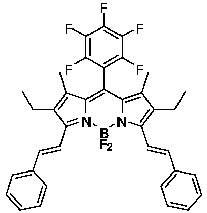 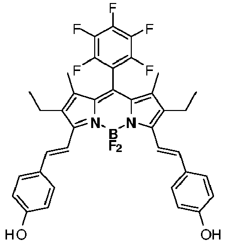 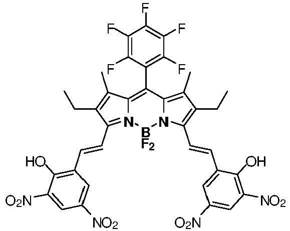 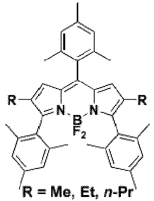 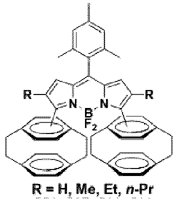 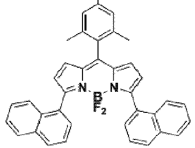 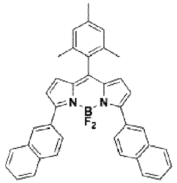 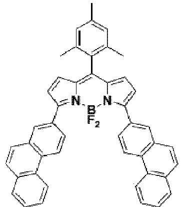 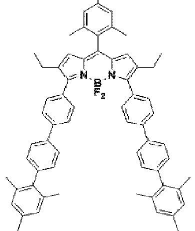 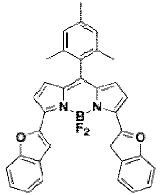 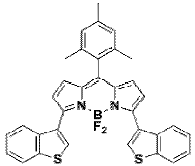 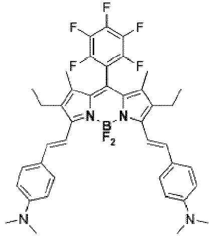 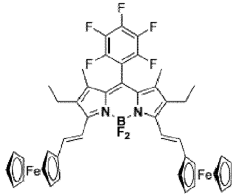 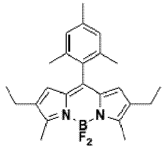 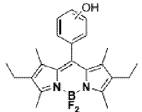 **OH in position *o*, *m* ou *p***

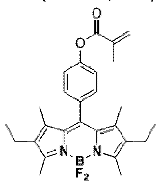

3. Use as claimed in any preceding claim, **characterised in that** the polymer is chosen from polycarbonate, polyester, polystyrene, polyethylene, polypropylene, polyethylene terephthalate, polyacrylate, polymethacrylate, poly(vinyl chloride), polyamides, polyaramides, ethylene vinyl acetate (EVA), polyurethane, thermoplastic polyurethane (TPU), cyanoacrilate, rosin resins, pine resins, light-curing resins or mixtures thereof.

4. Use according to claim 3, **characterised in that** the polymer is chosen from polycarbonate, polyester, polypropylene, thermoplastic polyurethane or light-curing resins, preferably polycarbonate and thermoplastic polyurethane or mixtures thereof.

5. Use according to claim 4, **characterised in that** the polymer is polycarbonate, polyester, polypropylene or mixtures thereof.

6. Use as claimed in any preceding claim, **characterised in that** the product is an identity, fiduciary or administrative document.

7. Use according to any of claims 1 to 6, **characterised in that** the securing element has the form of a layer.

8. Use according to any of claims 1 to 6, **characterised in that** the securing element is an ink or a varnish.

9. Use according to any of claims 1 to 6, **characterised in that** the securing element is an adhesive.

10. Securing element of a product, in particular a document, said securing element comprising a polymer and one or more compounds of the 4-bora-3a,4a-diaza-s-indacene family, said compound or compounds being incorporated in said polymer and are chosen from those of formula I: 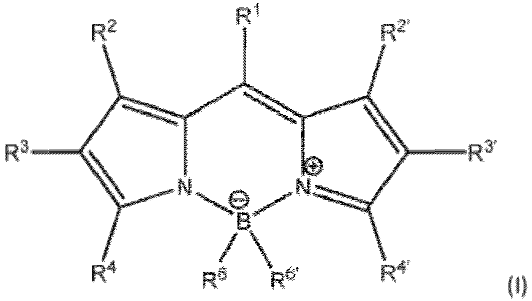 wherein,
**R¹** is phenyl substituted by one or several groups chosen from methyl, fluoro, hydroxy, acetyl and methacrylate, preferably from methyl, fluoro, hydroxy and acetyl, and more preferably from methyl or fluoro;
**R²** and **R²** are independently chosen from hydrogen and C1 to C2 alkyl;
**R³** and **R³** are independently chosen from hydrogen, aryl, heteroaryl, cycloalkyl, alkyl, alkenyl, alkynyl, said aryl, heteroaryl, cycloalkyl, alkyl, alkenyl and alkynyl being optionally substituted by one or several groups chosen from C1 to C4 alkyl, aryl, hydroxy and ferrocene, said aryl group being optionally substituted by one or several groups chosen from aryl, C1 to C2 alkyl, halogen, hydroxy, dimethylamino, nitro, said aryl being optionally substituted by a C1 to C2 alkyl group;
**R⁴** and **R^{4'}** are independently chosen from aryl, heteroaryl, cycloalkyl, alkyl, alkenyl, said aryl, heteroaryl, cycloalkyl, alkyl and alkenyl being optionally substituted by one or several groups chosen from C1 to C3 alkyl, aryl, hydroxy and ferrocene, said aryl group being optionally substituted by one or several groups chosen from aryl, C1 to C2 alkyl, halogen, hydroxy, dimethylamino, nitro, said aryl being optionally substituted by a C1 to C2 alkyl group;
**R⁵** is C1 to C4 alkyl or C1 to C4 alkenyl.
**R⁶** and **R^{6'}** are independently chosen from halogens, C1 to C4 alkyl, C2 to C4 alkenyl or aryl, said aryl being optionally substituted by one or several groups chosen from C1 to C2 alkyl, hydroxy, R5COO- and halogen.

11. Securing element according to claim 10, **characterised in that** the compound or compounds of the 4-bora-3a,4a-diaza-s-indacene family are chosen from: 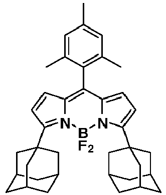 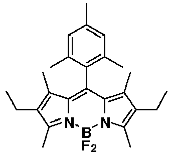 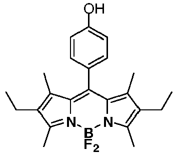 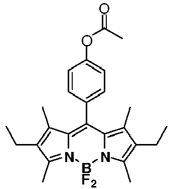 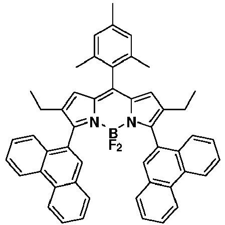 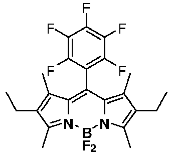 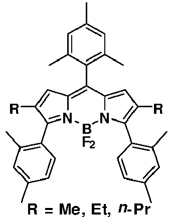 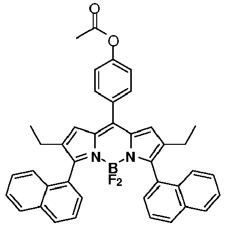 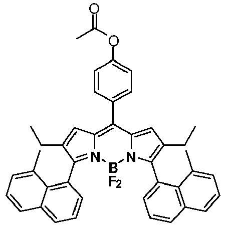 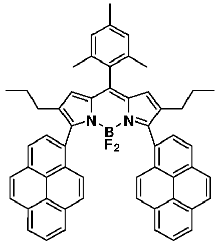 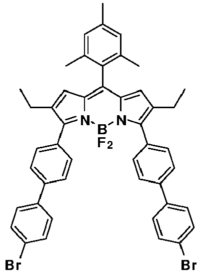 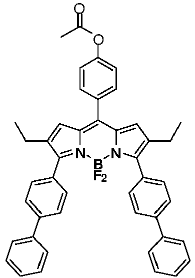 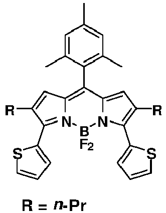 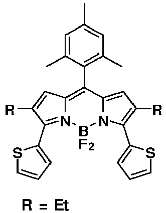 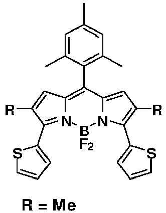 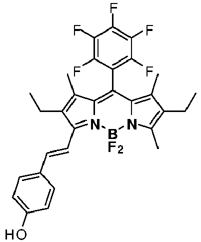 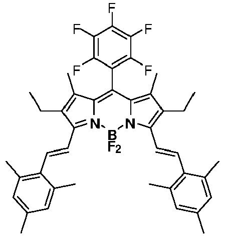 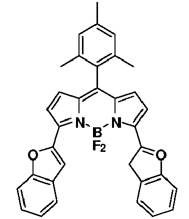 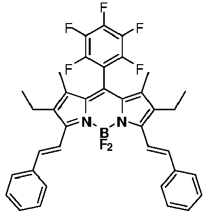 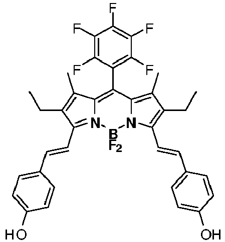 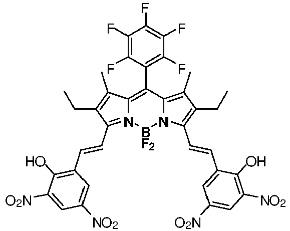 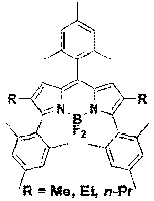 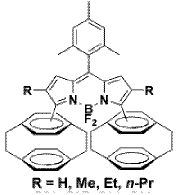 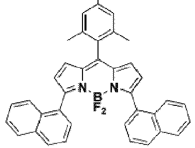 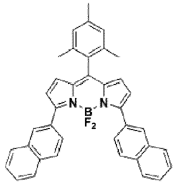 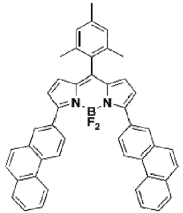 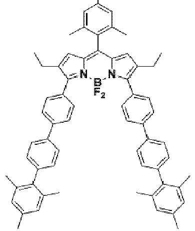 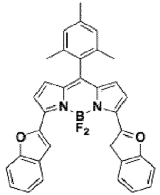 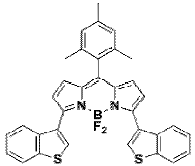 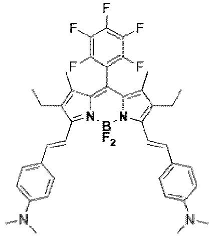 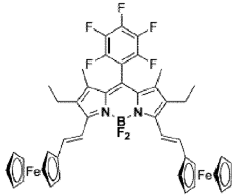 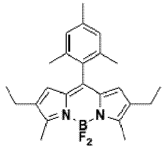 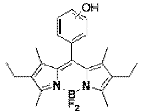 **OH in position *o*, *m* ou *p***

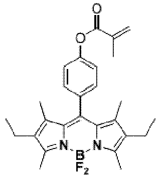

12. Securing element according to one of claims 10 and 11, **characterised in that** the polymer is chosen from polycarbonate, polyester, polystyrene, polyethylene, polypropylene, polyethylene terephthalate, polyacrylate, polymethacrylate, poly(vinyl chloride), polyamides, polyaramides, ethylene vinyl acetate (EVA), polyurethane, thermoplastic polyurethane (TPU), or cyanoacrilate, rosin resins, pine resins, light-curing resins or mixtures thereof.

13. Securing element according to claim 12, **characterised in that** the polymer is chosen from polycarbonate, polyester, polypropylene, thermoplastic polyurethane and light-curing resins, preferably from polycarbonate and thermoplastic polyurethane.

14. Securing element according to claim 13, **characterised in that** the polymer is polycarbonate, polyester, polypropylene or mixtures thereof.

15. Securing element according to one of claims 10 to 14, **characterised in that** it has the form of a layer.

16. Securing element according to claim 15, **characterised in that** the layer has a thickness ranging from 0.050 mm to 0.800 mm, preferably from 0.200 mm to 0.600 mm and more preferably a thickness of about 0.400 mm.

17. Securing element according to claim 15, **characterised in that** the layer is a film.

18. Securing element according to claims 12 and 15, **characterised in that** the polymer is polycarbonate and **in that** it has the form of a layer with a thickness ranging from 100 µm to 800 µm.

19. Securing element according to claims 12 and 15, **characterised in that** the polymer is polypropylene and **in that** it has the form of a layer with a thickness ranging from 15 µm to 100 µm.

20. Securing element according to any of claims 10 to 14, **characterised in that** the securing element is an ink or varnish.

21. Securing element according to any of claims 10 to 14, **characterised in that** the securing element is an adhesive.

22. Method for securing a product, in particular a document comprising a step of preparing a securing element such as defined according to any of claims 10 to 21, said securing element able to form the product and in particular the document as such, or be applied to said product and in particular to said document to be secured.

23. Method for securing according to claim 20, **characterised in that** the application of said securing element is carried out over at least one portion of said product, in particular of said document, to be secured.

24. Method for securing according to claims 20 or 21, **characterised in that** the product to be secured is an identity, fiduciary or administrative document.
